# EUROPEAN PATENT APPLICATION

(11) **EP 4 847 894 A1**
(43) Date of publication of application: **02.12.2026**
(21) Application number: 24944364.9
(22) Date of filing: 20.11.2024
(51) Int. Cl.: G01M 3/04, G01M 3/16

(54) **BATTERY ELECTROLYTE LEAKAGE DETECTION SYSTEM AND METHOD**

(30) Priority: 24.06.2024 CN 202410825656
(71) Applicant: Contemporary Amperex Technology Co., Limited, Ningde, Fujian 352100 (CN); CONTEMPORARY AMPEREX RUNZHI SOFTWARE TECHNOLOGY LIMITED, Ningde, Fujian 352100 (CN)
(72) Inventor: LIU, Yanmin, Ningde, Fujian 352100 (CN); JIANG, Ping, Ningde, Fujian 352100 (CN); WU, Hanguo, Ningde, Fujian 352100 (CN)
(74) Representative: Ran, Handong
(86) International application number: PCT/CN2024/133335
(87) International publication number: WO 2026/000799

(57) **Abstract**

A battery electrolyte leakage detection system, comprising an image collection assembly (10), a light source assembly (11), and an industrial personal computer (12), which is connected to both of the image collection assembly (10) and the light source assembly (11), wherein the light source assembly (11) may face a target surface of a battery to be subjected to detection, and is used for projecting target detection light to the target surface of said battery; the image collection assembly (10) may be disposed around the light source assembly (11), and is used for collecting image data of the target surface of said battery and outputting multi-channel image data corresponding to the target surface; and the industrial personal computer (12) can be used for acquiring the multi-channel image data from the image collection assembly, and performing electrolyte leakage detection on said battery on the basis of the multi-channel image data, so as to obtain an electrolyte leakage detection result. A more accurate electrolyte leakage detection result for a target surface of a battery can be obtained on the basis of multi-channel image data, and the accuracy of the electrolyte leakage detection result is relatively high. The present application further relates to a battery electrolyte leakage detection method.

## Description

### CROSS-REFERENCE TO RELATED APPLICATIONS

The present application claims priority to Chinese Patent Application No. 2024108256560, filed on June 24, 2024 and entitled "BATTERY ELECTROLYTE LEAKAGE DETECTION SYSTEM AND METHOD", which is incorporated herein by reference in its entirety.

### TECHNICAL FIELD

The present application relates to the technical field of batteries, and in particular, to a battery electrolyte leakage detection system and method.

### BACKGROUND

During battery production, in a liquid injection procedure, a case in which an electrolyte overflows from a top cover of the battery, and the like may occur in a battery, affecting performance of the battery. Therefore, electrolyte leakage detection on a battery is very important.

In the related art, whether electrolyte leakage exists in a battery is detected in a manual visual inspection manner. However, in the related art, there is a problem of low accuracy of electrolyte leakage detection.

### SUMMARY

In view of the foregoing problem, the present application provides a battery electrolyte leakage detection system and method, to resolve a problem of low accuracy of electrolyte leakage detection in the related art.

According to a first aspect, an embodiment of the present application provides a battery electrolyte leakage detection system, where the battery electrolyte leakage detection system includes an image acquisition component, a light source assembly, and an industrial personal computer separately connected to the image acquisition component and the light source assembly, where
the light source assembly faces a target surface of a to-be-detected battery, and is configured to project target detection light onto the target surface of the battery;
the image acquisition component is disposed around the light source assembly, and is configured to acquire image data of the target surface of the battery and output multi-channel image data corresponding to the target surface; and
the industrial personal computer is configured to obtain the multi-channel image data from the image acquisition component and perform electrolyte leakage detection on the battery according to the multi-channel image data, to obtain an electrolyte leakage detection result.

In this embodiment of the present application, the multi-channel image data corresponding to the target surface of the to-be-detected battery is obtained by combining the light source assembly with the image acquisition component, so that the industrial personal computer performs electrolyte leakage detection on the battery according to the multi-channel image data corresponding to the target surface. Because image data of each channel may be used to indicate an electrolyte leakage condition on the target surface of the battery in the channel, the multi-channel image data in this embodiment of the present application can more clearly and completely indicate an electrolyte leakage condition on the target surface of the battery in different channels. Therefore, the electrolyte leakage detection result of the target surface of the battery can be more accurately obtained according to the multi-channel image data, and accuracy of the electrolyte leakage detection result is relatively high.

In some embodiments, the light source assembly includes a preset light source component disposed opposite to the target surface of the battery, where
the preset light source component is configured to project the target detection light onto the target surface of the battery according to a preset light-emitting setting parameter.

In this embodiment of the present application, the preset light source component projects the target detection light onto the target surface of the battery according to the preset light-emitting setting parameter, so that the detection light projected onto the target surface can more clearly reflect a defect on the target surface. In this way, the image acquisition component can acquire multi-channel image data that can better reflect an electrolyte leakage condition on the target surface.

In some embodiments, the light source assembly further includes an optical mirror disposed between the target surface and the preset light source component; and the image acquisition component is disposed above the light source assembly, where
the preset light source component is configured to project the target detection light onto the target surface through the optical mirror according to the preset light-emitting setting parameter; and the target detection light is sinusoidal fringe light; and
the image acquisition component is specifically configured to acquire the image data of the target surface of the battery through the optical mirror, and output the multi-channel image data corresponding to the target surface.

In this embodiment of the present application, the light source assembly may include a preset light source component and an optical mirror, and the image acquisition component is disposed above the light source assembly. The preset light source component may project the sinusoidal fringe light onto the target surface through the optical mirror according to the preset light-emitting setting parameter, so that the image acquisition component may acquire image data of the target surface of the battery through the optical mirror, and output the multi-channel image data corresponding to the target surface. Because the multi-channel image data is image data obtained under illumination of the sinusoidal fringe light, and the multi-channel image data can present brightness of the target surface under illumination of the sinusoidal fringe light, which is conducive to clearly presenting an electrolyte leakage condition on the target surface, the multi-channel image data corresponding to the target surface that is output in this embodiment of the present application is conducive to further improving accuracy of electrolyte leakage detection.

In some embodiments, the image acquisition component is disposed opposite to the target surface of the battery, where
the preset light source component is configured to project the target detection light onto the target surface according to the preset light-emitting setting parameter; and the target detection light includes sectorized annular light.

In this embodiment of the present application, the light source assembly may include a preset light source component, and the image acquisition component is disposed opposite to the target surface of the battery. The preset light source component may project the sectorized annular light onto the target surface according to the preset light-emitting setting parameter, so that the image acquisition component can acquire the image data of the target surface of the battery, and output the multi-channel image data corresponding to the target surface. Because the multi-channel image data is image data obtained under illumination of the sectorized annular light, and the multi-channel image data can present brightness changes of the target surface under illumination in different degrees, which is conducive to clearly presenting an electrolyte leakage condition on the target surface, the multi-channel image data corresponding to the target surface that is output in this embodiment of the present application is conducive to further improving accuracy of electrolyte leakage detection.

In some embodiments, the battery electrolyte leakage detection system includes a first image detection mechanism and a second image detection mechanism that are symmetrically disposed, where the first image detection mechanism includes a first image acquisition component and a first light source assembly, and the second image detection mechanism includes a second image acquisition component and a second light source assembly, where
the first light source assembly faces a first target surface of the to-be-detected battery, and is configured to project first target detection light onto the first target surface of the battery;
the second light source assembly faces a second target surface of the to-be-detected battery, and is configured to project second target detection light onto the second target surface of the battery, where the first target surface and the second target surface are two surfaces that are symmetrically disposed in the battery;
the first image acquisition component is configured to acquire image data of the first target surface of the battery, and output multi-channel image data corresponding to the first target surface;
the second image acquisition component is configured to acquire image data of the second target surface of the battery, and output multi-channel image data corresponding to the second target surface; and
the industrial personal computer is configured to perform electrolyte leakage detection on the battery according to the obtained multi-channel image data corresponding to the first target surface and the obtained multi-channel image data corresponding to the second target surface, to obtain an electrolyte leakage detection result.

In this embodiment of the present application, the battery electrolyte leakage detection system includes the first image detection mechanism and the second image detection mechanism that are symmetrically disposed, where the first image detection mechanism is configured to obtain the multi-channel image data corresponding to the first target surface of the battery and the second image detection mechanism is configured to obtain the multi-channel image data corresponding to the second target surface of the battery, so that the industrial personal computer can separately perform electrolyte leakage detection on different target surfaces of the battery according to the multi-channel image data of the different target surfaces of the battery. It can be learned that, a symmetrical electrolyte leakage detection manner in this embodiment of the present application is conducive to improving electrolyte leakage detection efficiency.

In some embodiments, the battery electrolyte leakage detection system includes a third image detection mechanism and a fourth image detection mechanism that are disposed side by side, where the third image detection mechanism includes a third image acquisition component and a third light source assembly, and the fourth image detection mechanism includes a fourth image acquisition component and a fourth light source assembly, where
the third light source assembly faces a first region on the target surface of the to-be-detected battery, and is configured to project third target detection light to the first region on the target surface of the battery;
the fourth light source assembly faces a second region on the target surface of the to-be-detected battery, and is configured to project fourth target detection light to the second region on the target surface of the battery, where the first region and the second region are different regions on the target surface along a length direction;
the third image acquisition component is configured to acquire image data of the first region on the target surface, and output multi-channel image data corresponding to the first region on the target surface;
the fourth image acquisition component is configured to acquire image data of the second region on the target surface, and output multi-channel image data corresponding to the second region on the target surface; and
the industrial personal computer is configured to perform electrolyte leakage detection on the battery according to the obtained multi-channel image data corresponding to the first region on the target surface and the obtained multi-channel image data corresponding to the second region on the target surface, to obtain an electrolyte leakage detection result.

In this embodiment of the present application, the battery electrolyte leakage detection system includes the third image detection mechanism and the fourth image detection mechanism that are disposed side by side, where the third image detection mechanism is configured to obtain the multi-channel image data corresponding to the first region on the target surface of the battery, and the fourth image detection mechanism is configured to obtain the multi-channel image data corresponding to the second region on the target surface of the battery, so that the industrial personal computer may separately perform electrolyte leakage detection on the different regions of the target surface of the battery according to the multi-channel image data of the different regions of the target surface. It can be learned that, the side by side electrolyte leakage detection manner in this embodiment of the present application is conducive to further improving accuracy of electrolyte leakage detection.

In some embodiments, the battery electrolyte leakage detection system further includes a transfer track, an accommodating component, and a driving component; and the image acquisition component and the light source assembly are disposed around the transfer track, where
the accommodating component is disposed on the transfer track, and is configured to carry the to-be-detected battery, where the target surface of the battery faces a direction perpendicular to an extension direction of the transfer track;
the driving component is connected to the transfer track or the accommodating component, to drive the accommodating component to move along the transfer track; and
the transfer track is configured to move the to-be-detected battery from an electrolyte leakage detection position to a film wrapping position.

In this embodiment of the present application, the transfer track, the accommodating component, and the driving component are combined, so that the to-be-detected battery can be intelligently transported according to a preset transfer line, and electrolyte leakage detection may be sequentially performed on different to-be-detected batteries, which is conducive to improving efficiency of electrolyte leakage detection.

In some embodiments, the battery electrolyte leakage detection system further includes a control device separately connected to the driving component and the image acquisition component, where
the control device is configured to control the driving component to drive the accommodating component to move to the corresponding electrolyte leakage detection position along the transfer track, and control the image acquisition component to detect the multi-channel image data corresponding to the target surface of the battery.

In this embodiment of the present application, linked control on the driving component and the image acquisition component can be implemented through the control device, so that control flexibility of the battery electrolyte leakage detection system can be improved, which is conducive to improving efficiency of electrolyte leakage detection.

In some examples, the control device is further connected to the industrial personal computer, where
the control device is further configured to receive the electrolyte leakage detection result sent by the industrial personal computer, and determine, according to comparison between the electrolyte leakage detection result and a preset defect condition, whether the to-be-detected battery meets a preset production requirement, where the preset defect condition is used for indicating a plurality of preset electrolyte leakage defect conditions that do not meet the preset production requirement.

In this embodiment of the present application, the control device determines, according to comparison between the electrolyte leakage detection result and the preset defect condition, whether the to-be-detected battery meets the preset production requirement, to perform a preset operation in a timely manner when determining that the battery does not meet the preset production requirement, so as to relieve a case in which the battery is returned to a procedure for rework because the battery does not meet the production requirement, which is conducive to improving production efficiency of the battery.

In some embodiments, the battery electrolyte leakage detection system further includes a sliding rail, a cantilever, and a grabbing component, where the sliding rail is disposed above the transfer track through a support frame, a front end of the cantilever is movably disposed on the sliding rail, and the grabbing component is disposed at a rear end of the cantilever; and an extension direction of the sliding rail is perpendicular to the extension direction of the transfer track; and
the control device is specifically configured to: when determining that the to-be-detected battery does not meet the preset production requirement, control the cantilever to move above the battery along the sliding rail, and control the grabbing component to grab the battery along an extension direction of the cantilever, to move the battery to a preset waste region disposed near the transfer track.

The battery electrolyte leakage detection system in this embodiment of the present application may further include: a sliding rail, a cantilever, and a grabbing component that are disposed above the transfer track. The sliding rail is disposed above the transfer track through a support frame, a front end of the cantilever is movably disposed on the sliding rail, and the grabbing component may be disposed at a rear end of the cantilever. When it is determined that the to-be-detected battery does not meet the preset production requirement, the cantilever is controlled, through the control device, to move above the battery along the sliding rail, and the grabbing component is controlled to grab the battery along the extension direction of the cantilever, to move the battery to the preset waste region, so that a battery that does not meet the preset production requirement can be flexibly filtered out, to perform corresponding processing on the battery that does not meet the preset production requirement, and transfer the battery that meets the preset production requirement to a next preparation and detection procedure. This can relieve a case in which the battery is returned to a procedure for rework because the battery does not meet the production requirement, thereby facilitating improving production efficiency of the battery.

In some embodiments, the industrial personal computer is specifically configured to:
perform image fusion processing according to the multi-channel image data, to obtain a target fused image; and
perform electrolyte leakage detection processing according to the target fused image, to obtain the electrolyte leakage detection result.

In this embodiment of the present application, a manner in which electrolyte leakage detection processing is performed on the target fused image on which the multi-channel image data is fused is used. Because the target fused image is an image on which the multi-channel image data is fused, and the target fused image can provide more abundant and varied electrolyte leakage conditions on the target surface, in the manner of performing electrolyte leakage detection processing based on the target fused image, it is conducive to further improving accuracy of electrolyte leakage detection.

In some embodiments, the industrial personal computer is specifically configured to:
perform preset processing on the target fused image, to obtain a target binary image, where a pixel value of a pixel in a non-defect region in the target binary image is a first preset value, and a pixel value of a pixel in a defect region in the target binary image is a second preset value, where the second preset value is greater than the first preset value; and
determine the electrolyte leakage detection result according to the target binary image.

In this embodiment of the present application, preset processing is performed on the target fused image, to obtain the target binary image, and determine the electrolyte leakage detection result according to the target binary image. Because a boundary between the defect region and the non-defect region in the target binary image is obvious, the manner of determining the electrolyte leakage detection result according to the target binary image is conducive to more accurately and quickly determining the electrolyte leakage detection result.

According to a second aspect, an embodiment of the present application provides a battery electrolyte leakage detection method, where the method is applied to the industrial personal computer in the battery electrolyte leakage detection system embodiment; and the method includes:
obtaining, from an image acquisition component in the battery electrolyte leakage detection system, multi-channel image data corresponding to a target surface of a to-be-detected battery; and
performing electrolyte leakage detection on the battery according to the multi-channel image data, to obtain an electrolyte leakage detection result.

In this embodiment of the present application, because the multi-channel image data corresponding to the target surface can accurately indicate a defect condition on the target surface of the battery, accuracy of performing defect detection according to the multi-channel image data is relatively high.

In some embodiments, the performing electrolyte leakage detection on the battery according to the multi-channel image data, to obtain an electrolyte leakage detection result includes:
performing image fusion processing according to the multi-channel image data, to obtain a target fused image; and
performing electrolyte leakage detection processing according to the target fused image, to obtain the electrolyte leakage detection result.

In some embodiments, the performing electrolyte leakage detection processing according to the target fused image, to obtain the electrolyte leakage detection result includes:
performing preset processing on the target fused image, to obtain a target binary image, where a pixel value of a pixel in a non-defect region in the target binary image is a first preset value, and a pixel value of a pixel in a defect region in the target binary image is a second preset value, where the second preset value is greater than the first preset value; and
determining the electrolyte leakage detection result according to the target binary image.

In some embodiments, the determining the electrolyte leakage detection result according to the target binary image includes:
performing comprehensive detection on the target binary image according to a preset electrolyte leakage detection rule, to determine whether an electrolyte leakage region exists in the target binary image, where the preset electrolyte leakage detection rule is used for indicating a plurality of pieces of preset electrolyte leakage defect reference information.

In some embodiments, the determining the electrolyte leakage detection result according to the target binary image includes:
extracting a region image including defect regions from the target binary image; and
inputting the region image into a preset electrolyte leakage detection model, to obtain whether an electrolyte leakage region exists in the region image.

In some embodiments, the performing image fusion processing according to the multi-channel image data, to obtain a target fused image includes:
performing image fusion processing on the multi-channel image data, to obtain an initial fused image; and
if uniformity of grayscale values of different pixels in the initial fused image is less than preset uniformity, performing flat field correction processing on the initial fused image, to obtain the target fused image.

In some embodiments, the performing preset processing on the target fused image, to obtain a target binary image includes:
performing image differential processing according to the target fused image and the initial fused image, to identify a defect region in the target fused image; and
performing binarization processing on the defect region and a non-defect region in the target fused image, to obtain the target binary image.

In some embodiments, the method further includes:
sending the electrolyte leakage detection result to a control device in the battery electrolyte leakage detection system, to indicate the control device to determine, according to comparison between the electrolyte leakage detection result and a preset defect condition, whether the to-be-detected battery meets a preset production requirement, where the preset defect condition is used for indicating a plurality of preset electrolyte leakage defect conditions that do not meet the preset production requirement.

The foregoing descriptions are only an overview of the technical solution of the present application. In order to better understand the technical means of the present application, it can be practiced in accordance with the contents of the descriptions, and in order to make the above and other objects, features and advantages of the present application more apparent and easy to understand, specific implementations of the present application are set forth below.

### BRIEF DESCRIPTION OF THE DRAWINGS

Various other advantages and benefits will become clear to a person of ordinary skill in the art by reading the following detailed description of exemplary implementations. The accompanying drawings are only for the purpose of illustrating the preferred implementations and are not construed as limiting the present application. In addition, in all the accompanying drawings, same parts are indicated by the same reference numerals. In the accompanying drawings,
FIG. 1 is a schematic diagram of a structure of a battery electrolyte leakage detection system according to some embodiments of the present application;
FIG. 2 is a schematic diagram of a structure of a battery electrolyte leakage detection system according to some other embodiments of the present application;
FIG. 3 is a schematic diagram of an appearance structure of an image acquisition component and a light source assembly according to some embodiments of the present application;
FIG. 4 is a schematic diagram of an internal structure of an image acquisition component and a light source assembly according to some embodiments of the present application;
FIG. 5 is a schematic diagram of a structure of a battery electrolyte leakage detection system according to some other embodiments of the present application;
FIG. 6 is a schematic diagram of a structure of a battery electrolyte leakage detection system according to some other embodiments of the present application;
FIG. 7 is a schematic diagram of a structure of a battery electrolyte leakage detection system according to some other embodiments of the present application;
FIG. 8 is a schematic diagram of a three-dimensional structure of a battery electrolyte leakage detection system according to some embodiments of the present application;
FIG. 9 is a schematic diagram of a front view structure of a battery electrolyte leakage detection system according to some embodiments of the present application;
FIG. 10 is a schematic diagram of a top view structure of a battery electrolyte leakage detection system according to some embodiments of the present application;
FIG. 11 is an overall schematic diagram of a battery electrolyte leakage detection system according to some embodiments of the present application;
FIG. 12 is a schematic diagram of a disposing manner of an image detection mechanism according to an embodiment of the present application;
FIG. 13 is a schematic flowchart of a battery electrolyte leakage detection method according to some embodiments of the present application;
FIG. 14 is a schematic flowchart of a battery electrolyte leakage detection method according to some other embodiments of the present application;
FIG. 15 is a schematic flowchart of a battery electrolyte leakage detection method according to some other embodiments of the present application; and
FIG. 16 is a schematic diagram of a structure of a battery electrolyte leakage detection device according to some embodiments of the present application.

### DETAILED DESCRIPTION

Embodiments of the technical solution of the present application will be described in detail with reference to the accompanying drawings. The following embodiments are only intended to more clearly illustrate the technical solutions of the present application and are therefore intended as examples only and are not intended to limit the scope of protection of the present application.

Unless otherwise defined, all technical and scientific terms used herein have the same meanings as are commonly understood by a person skilled in the art of the present application. Terms used herein are for the purpose of describing specific embodiments only and are not intended to limit the present application. The term "comprising" and any variations thereof in the descriptions and claims of the present application and the foregoing descriptions of the drawings are intended to cover non-exclusive inclusion.

In the descriptions of embodiments of the present application, the technical terms "first", "second", and the like are used only to distinguish different objects and are not understood to indicate or imply relative importance or to imply the quantity, specific order or primary and secondary relationship of the indicated technical features. In the descriptions of the embodiments of the present application, "a plurality of" means two or more (including two), unless otherwise expressly and specifically defined.

A battery electrolyte leakage detection system and method provided in the embodiments of the present application may be applied to an application scenario of battery electrolyte leakage detection. Certainly, the battery electrolyte leakage detection system and method may alternatively be applied to other defect detection on a surface of a battery, for example, unevenness defect detection and/or scratch defect detection.

Generally, a production process of a battery includes a plurality of preparation and detection procedures. The plurality of preparation and detection procedures may include, but are not limited to, an electrolyte injection procedure and a blue film wrapping process. During production of the battery, in the electrolyte injection procedure of the battery, there may be a case in which the electrolyte overflows from a top cover of the battery, which may lead to insufficient adhesion in the subsequent blue film wrapping process. Bubbles are generated between a blue film and a surface of the battery, which may affect safety performance of the battery. Therefore, electrolyte leakage detection on a battery is very important.

In the related art, whether electrolyte leakage exists in a battery is detected in a manual visual inspection manner. However, in the related art, there is a problem of low accuracy of electrolyte leakage detection, and there may be a risk of omission.

To resolve the problem in the related art that the accuracy of electrolyte leakage detection is low in the manual visual inspection manner, embodiments of the present application provide a case in which multi-channel image data corresponding to a surface of a to-be-detected battery may be acquired, and electrolyte leakage detection may be performed on the surface of the battery according to the multi-channel image data. Image data of each channel may be used to indicate an electrolyte leakage condition on the surface of the battery in the channel, and the multi-channel image data in this embodiment of the present application can more clearly and completely indicate electrolyte leakage conditions on the surface of the battery in different channels. Therefore, the electrolyte leakage condition on the surface of the battery can be more accurately detected according to the multi-channel image data.

Based on the foregoing consideration, this embodiment of the present application provides a case in which multi-channel image data corresponding to a target surface of the to-be-detected battery is obtained by combining a light source assembly with an image acquisition component, so that an industrial personal computer performs electrolyte leakage detection on the battery according to the multi-channel image data corresponding to the target surface. The image data of each channel may be used to indicate the electrolyte leakage condition on the target surface of the battery in the channel, and the multi-channel image data in this embodiment of the present application can more clearly and completely indicate the electrolyte leakage condition on the target surface of the battery in different channels. Therefore, an electrolyte leakage detection result of the target surface of the battery can be more accurately obtained according to the multi-channel image data, and accuracy of the electrolyte leakage detection result is relatively high.

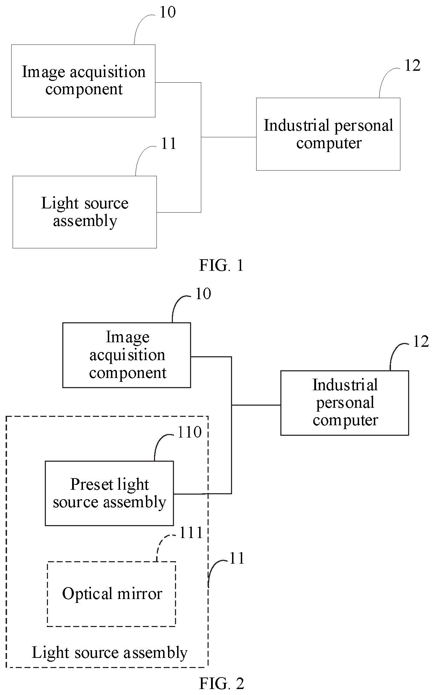

In some embodiments, FIG. 1 is a schematic diagram of a structure of a battery electrolyte leakage detection system according to some embodiments of the present application. As shown in FIG. 1, the battery electrolyte leakage detection system in this embodiment of the present application may include, but is not limited to, an image acquisition component 10, a light source assembly 11, and an industrial personal computer 12 (which may alternatively be referred to as a visual industrial personal computer) separately connected to the image acquisition component 10 and the light source assembly 11.

The light source assembly 11 in this embodiment of the present application may face a target surface of a to-be-detected battery, and is configured to project target detection light onto the target surface of the battery. The target surface of the battery may include, but is not limited to, at least one of the following: a top surface of the battery, a bottom surface of the battery, a primary side surface (or referred to as a large side surface) of the battery, and a secondary side surface (or referred to as a small side surface) of the battery. An area of the primary side surface of the battery is greater than an area of the secondary side surface of the battery. For example, the light source assembly 11 may face the primary side surface of the battery, to project the target detection light onto the primary side surface of the battery. Certainly, the light source assembly 11 may further face another surface that needs to be detected and that is of the to-be-detected battery.

The target detection light in this embodiment of the present application may be detection light that can reflect a defect on the target surface when the target surface is irradiated. For example, the target detection light may include, but is not limited to, sinusoidal fringe light, or sectorized annular light. The sectorized annular light may be light emitted by sequentially lighting up different sector sections of an annular light source.

The image acquisition component 10 in this embodiment of the present application may be disposed around the light source assembly 11, and is configured to acquire image data of the target surface of the battery and output multi-channel image data corresponding to the target surface.

The multi-channel image data in this embodiment of the present application may include, but is not limited to, at least one of the following: grayscale image data, depth image data, X-phase image data, Y-phase image data, diffused reflection image data, gloss image data, black and white image data, and 2D image data. The image data of each channel may be used to indicate the electrolyte leakage condition on the target surface of the battery in the channel. That is, the multi-channel image data may be used to indicate the electrolyte leakage condition on the target surface in a plurality of channels. Therefore, the multi-channel image data in this embodiment of the present application can more clearly and completely indicate the electrolyte leakage condition on the target surface of the battery.

In a possible implementation, the image acquisition component 10 in this embodiment of the present application may include, but is not limited to, a plurality of data cameras, and different data cameras may be configured to acquire image data of different channels.

In another possible implementation, the image acquisition component 10 in this embodiment of the present application may include, but is not limited to, a hybrid data camera, and may output multi-channel image data.

It should be understood that, the hybrid data camera has different running modes. A running mode of the hybrid data camera in this embodiment of the present application may include, but is not limited to, a phase deflectometry mode or a photometric stereo mode, so that multi-channel image data can be acquired. In the phase deflectometry mode of the hybrid data camera, an object surface height is measured by using a phase measuring deflectometry (PMD) principle, to obtain 2.5D image information. The photometric stereo mode of the hybrid data camera is a method for estimating object surface geometry by using a plurality of light source directions, and is a technology for restoring the object surface geometry and reflection characteristics by acquiring a plurality of object images obtained through irradiation by light sources in different directions (because a light source direction changes, different regions on an object surface are illuminated in different degrees, and brightness changes are generated on the images).

In this implementation, in a manner of the hybrid data camera, multi-channel image data may be output through one camera, which is conducive to reducing costs of the battery electrolyte leakage detection system.

For example, the image acquisition component 10 may directly acquire image data of a target surface of a battery, to output multi-channel image data corresponding to the target surface. That the image acquisition component 10 directly acquires the image data of the target surface of the battery may mean that the image acquisition component 10 faces the target surface, to acquire the image data of the target surface.

For another example, the image acquisition component 10 may indirectly acquire image data of a target surface of a battery, to output multi-channel image data corresponding to the target surface. That the image acquisition component 10 indirectly acquires the image data of the target surface of the battery may mean that the image acquisition component 10 may face an optical mirror that can reflect an image of the target surface, to indirectly acquire the image data of the target surface.

Certainly, the image acquisition component 10 may alternatively acquire image data of a target surface of a battery in another manner, and output multi-channel image data corresponding to the target surface.

It should be understood that, the image acquisition component 10 and the light source assembly 11 in this embodiment of the present application may be referred to as image detection mechanisms, and may be configured to detect the multi-channel image data corresponding to the target surface of the battery, and send the multi-channel image data to the industrial personal computer 12.

The industrial personal computer 12 in this embodiment of the present application may be configured to obtain the multi-channel image data from the image acquisition component 10 and perform electrolyte leakage detection on the battery according to the multi-channel image data, to obtain an electrolyte leakage detection result.

It should be understood that, the image acquisition component 10 may directly send the multi-channel image data to the industrial personal computer 12, or may forward the multi-channel image data to the industrial personal computer 12 through an intermediate device. Certainly, the image acquisition component 10 may alternatively send the multi-channel image data to the industrial personal computer in another manner. This is not limited in this embodiment of the present application.

It should be noted that, in this embodiment of the present application, the image acquisition component 10 may send the multi-channel image data of the image acquisition component 10 to the industrial personal computer 12, so that the industrial personal computer 12 may directly obtain the multi-channel image data of the image acquisition component 10. Alternatively, the image acquisition component 10 may send address information used to store the multi-channel image data to the industrial personal computer 12, so that the industrial personal computer 12 may obtain the multi-channel data of the image acquisition component 10 based on the address information.

In a possible implementation, the industrial personal computer 12 may perform image fusion processing on image data of some channels or image data of all channels in the multi-channel image data corresponding to the target surface, to obtain a target fused image, and perform preset electrolyte leakage detection processing according to the target fused image, to obtain an electrolyte leakage detection result. The target fused image may include, but is not limited to, a 2D image and/or a 2.5D image. Because the target fused image is an image obtained by fusing a plurality of pieces of multi-channel image data, the target fused image may provide more abundant and varied electrolyte leakage conditions on the target surface.

For example, the industrial personal computer may perform image fusion processing on grayscale image data, depth image data, X-phase image data, and Y-phase image data in the multi-channel image data corresponding to the target surface, to obtain the target fused image.

In another possible implementation, the industrial personal computer 12 may input the multi-channel image data corresponding to the target surface into a first preset electrolyte leakage detection model, to obtain the electrolyte leakage detection result.

The first preset electrolyte leakage detection model in the embodiments of the present application may include, but is not limited to, a pre-trained artificial intelligence (Artificial Intelligence, AI) model (or referred to as a deep learning model or the like). For example, the first preset electrolyte leakage detection model may include, but is not limited to, a YOLOV5 model, which is an efficient and accurate target detection model.

It should be understood that, when an image format of the obtained multi-channel image data does not conform to a preset format, before performing electrolyte leakage detection on the battery according to the multi-channel image data corresponding to the target surface of the battery, the industrial personal computer may perform image format conversion on the obtained multi-channel image data corresponding to the target surface, to perform electrolyte leakage detection on the battery according to the converted multi-channel image data.

When the image format of the obtained multi-channel image data conforms to the preset format, the industrial personal computer may directly perform electrolyte leakage detection on the battery according to the multi-channel image data corresponding to the target surface of the battery.

Certainly, the industrial personal computer may alternatively perform electrolyte leakage detection on the battery in another manner according to the multi-channel image data corresponding to the target surface of the battery.

The image data of each channel may be used to indicate an electrolyte leakage condition of the target surface of the battery in the channel, that is, the multi-channel image data may be used to indicate the electrolyte leakage condition of the target surface in a plurality of channels, and the multi-channel image data in this embodiment of the present application can more clearly and completely indicate the electrolyte leakage condition of the target surface of the battery in different channels. Therefore, the industrial personal computer can more accurately obtain an electrolyte leakage detection result of the target surface of the battery according to the multi-channel image data.

For example, the electrolyte leakage detection result in this embodiment of the present application may include, but is not limited to, whether an electrolyte leakage region exists on the target surface of the battery and information about the corresponding electrolyte leakage region when the electrolyte leakage region exists. The information about the electrolyte leakage region may include, but is not limited to, a position of the electrolyte leakage region and/or a size of the electrolyte leakage region.

In conclusion, the battery electrolyte leakage detection system in this embodiment of the present application may include an image acquisition component, a light source assembly, and an industrial personal computer separately connected to the image acquisition component and the light source assembly. The light source assembly may face a target surface of a to-be-detected battery, and is configured to project target detection light onto the target surface of the battery. The image acquisition component may be disposed around the light source assembly, and is configured to acquire image data of the target surface of the battery and output multi-channel image data corresponding to the target surface. The industrial personal computer may be configured to obtain the multi-channel image data from the image acquisition component and perform electrolyte leakage detection on the battery according to the multi-channel image data, to obtain an electrolyte leakage detection result. It can be learned that, in comparison with a manual visual inspection manner in the related art, in this embodiment of the present application, the multi-channel image data corresponding to the target surface of the to-be-detected battery is obtained by combining the light source assembly with the image acquisition component, so that the industrial personal computer performs electrolyte leakage detection on the battery according to the multi-channel image data corresponding to the target surface. The image data of each channel may be used to indicate an electrolyte leakage condition on the target surface of the battery in the channel, and the multi-channel image data in this embodiment of the present application can more clearly and completely indicate the electrolyte leakage condition on the target surface of the battery in different channels. Therefore, an electrolyte leakage detection result of the target surface of the battery can be more accurately obtained according to the multi-channel image data, and accuracy of the electrolyte leakage detection result is relatively high.

In some embodiments, based on the foregoing embodiment, in this embodiment of the present application, related content of "the industrial personal computer 12 performs electrolyte leakage detection on the battery according to the multi-channel image data, to obtain an electrolyte leakage detection result" is exemplarily described.

The industrial personal computer 12 in this embodiment of the present application may be specifically configured to: perform image fusion processing according to the multi-channel image data, to obtain a target fused image; and perform electrolyte leakage detection processing according to the target fused image, to obtain an electrolyte leakage detection result.

For example, the industrial personal computer 12 may perform image fusion processing on image data of some channels or image data of all channels in the multi-channel image data corresponding to the target surface, to obtain a target fused image.

In a possible implementation, the industrial personal computer 12 may be specifically configured to: perform preset processing on the target fused image, to obtain a target binary image, and determine an electrolyte leakage detection result according to the target binary image, where a pixel value of a pixel in a non-defect region in the target binary image is a first preset value, and a pixel value of a pixel in a defect region in the target binary image is a second preset value, where the second preset value is greater than the first preset value.

For example, the pixel in the defect region in the target binary image is a white pixel, and the pixel in the non-defect region is a black pixel.

For example, preset processing in this embodiment of the present application may include, but is not limited to, at least one of the following: image differentiation processing, filtering processing, and binarization processing.

In this embodiment of the present application, the industrial personal computer performs preset processing on the target fused image, to obtain the target binary image, and determines the electrolyte leakage detection result according to the target binary image. Because a boundary between the defect region and the non-defect region in the target binary image is obvious, the manner of determining the electrolyte leakage detection result according to the target binary image is conducive to more accurately and quickly determining the electrolyte leakage detection result.

In another possible implementation, the industrial personal computer 12 may be specifically configured to input the target fused image into a second preset electrolyte leakage detection model, to obtain an electrolyte leakage detection result.

The second preset electrolyte leakage detection model in the embodiments of the present application may include, but is not limited to, a pre-trained AI model.

Certainly, the industrial personal computer may further perform electrolyte leakage detection processing in another manner according to the target fused image, to obtain an electrolyte leakage detection result.

In conclusion, in this embodiment of the present application, the industrial personal computer performs image fusion processing according to the multi-channel image data, to obtain a target fused image; and further performs electrolyte leakage detection processing according to the target fused image, to obtain an electrolyte leakage detection result. It can be learned that, in this embodiment of the present application, a manner in which electrolyte leakage detection processing is performed on the target fused image on which the multi-channel image data is fused is used. Because the target fused image is an image on which the multi-channel image data is fused, and the target fused image can provide more abundant and varied electrolyte leakage conditions on the target surface, in the manner of performing electrolyte leakage detection processing based on the target fused image, it is conducive to further improving accuracy of electrolyte leakage detection.

In some embodiments, FIG. 2 is a schematic diagram of a structure of a battery electrolyte leakage detection system according to some other embodiments of the present application. Based on the foregoing embodiments, related content of the foregoing light source assembly 11 is exemplarily described in this embodiment of the present application. As shown in FIG. 2, the light source assembly 11 in this embodiment of the present application may include, but is not limited to, a preset light source component 110 disposed opposite to a target surface of a battery, to project target detection light onto the target surface of the battery.

For example, the light source assembly 11 may be disposed parallel to and opposite to the target surface of the battery, so that the target detection light may be projected parallel onto the target surface of the battery. For another example, the light source assembly 11 may be disposed relative to the target surface of the battery at a specific inclination angle, so that the target detection light may be projected onto the target surface of the battery at the specific inclination angle.

The preset light source component 110 in this embodiment of the present application may be configured to project the target detection light onto the target surface of the battery according to a preset light-emitting setting parameter. The preset light-emitting setting parameter may be used to indicate a setting parameter of the target detection light emitted by the preset light source component 110. For example, the preset light-emitting setting parameter may include, but is not limited to, a light-emitting type and/or a light-emitting period.

For example, when the light-emitting type in the preset light-emitting setting parameter is a sinusoidal fringe light type, the target detection light projected by the preset light source component 110 onto the target surface of the battery may be sinusoidal fringe light.

For another example, when the light-emitting type in the preset light-emitting setting parameter is a sectorized annular light type, the target detection light projected by the preset light source component 110 onto the target surface of the battery may be sectorized annular light.

It should be understood that, the preset light source component 110 may be a compound light source component, which may separately emit different target detection light according to different preset light-emitting setting parameters. Alternatively, the preset light source component 110 may include different independent light source components, which may emit corresponding target detection light according to a preset light-emitting setting parameter.

In this embodiment of the present application, the preset light source component 110 projects the target detection light onto the target surface of the battery according to the preset light-emitting setting parameter, so that the detection light projected onto the target surface can more clearly reflect a defect on the target surface. In this way, an image acquisition component 10 can acquire multi-channel image data that can better reflect an electrolyte leakage condition on the target surface.

In a possible implementation, as shown in FIG. 2, the light source assembly 11 may further include an optical mirror 111 disposed between the target surface of the battery and the preset light source component 110. Correspondingly, the image acquisition component 10 may be disposed above the light source assembly 11, so that the image acquisition component 10 may indirectly acquire image data of the target surface of the battery through the optical mirror 111. The optical mirror 111 may include, but is not limited to, a half-silvered mirror.

The preset light source component 110 in this embodiment of the present application may be configured to project the target detection light onto the target surface through the optical mirror 111 according to the preset light-emitting setting parameter. The target detection light may include sinusoidal fringe light. For example, the preset light source component 110 may be a programmable screen light source, which can emit sinusoidal fringe light according to the preset light-emitting setting parameter. Certainly, the preset light source component 110 may alternatively be another light source that can emit the sinusoidal fringe light.

The image acquisition component 10 in this embodiment of the present application may be specifically configured to acquire the image data of the target surface of the battery through the optical mirror 111, and output the multi-channel image data corresponding to the target surface.

It should be understood that, when the target detection light is projected onto the target surface of the battery, the target surface reflects a part of the target detection light (or reflected detection light for short) to the optical mirror 111, and the optical mirror 111 may reflect, to the image acquisition component 10, the reflected detection light reflected by the target surface, so that the image acquisition component 10 may indirectly acquire the image data of the target surface of the battery by acquiring the reflected detection light reflected by the optical mirror 111, to obtain the multi-channel image data corresponding to the target surface.

For example, when the preset light source component 110 is a programmable screen light source, and the image acquisition component 10 is a hybrid data camera, an operation mode of the hybrid data camera may be a phase deflection mode, so that the multi-channel image data (or referred to as a phase deflection effect image) corresponding to the target surface can be obtained. In this way, the industrial personal computer can perform electrolyte leakage detection according to the phase deflection effect image corresponding to the target surface.

In this embodiment of the present application, the light source assembly may include a preset light source component and an optical mirror, and the image acquisition component is disposed above the light source assembly. The preset light source component may project the sinusoidal fringe light onto the target surface through the optical mirror according to the preset light-emitting setting parameter, so that the image acquisition component may acquire the image data of the target surface of the battery through the optical mirror, and output the multi-channel image data corresponding to the target surface. Because the multi-channel image data is image data obtained under illumination of the sinusoidal fringe light, and the multi-channel image data can present brightness of the target surface under illumination of the sinusoidal fringe light, which is conducive to clearly presenting an electrolyte leakage condition on the target surface, the multi-channel image data corresponding to the target surface that is output in this embodiment of the present application is conducive to further improving accuracy of electrolyte leakage detection.

In another possible implementation, as shown in FIG. 2, the light source assembly 11 may include, but is not limited to, a preset light source component 110 disposed opposite to the target surface of the battery. Correspondingly, the image acquisition component 10 may be disposed opposite to the target surface of the battery, so that the image acquisition component 10 may directly acquire the image data of the target surface of the battery.

The preset light source component 110 in this embodiment of the present application may be configured to project the target detection light onto the target surface according to the preset light-emitting setting parameter. The target detection light may include sectorized annular light. For example, the preset light source component 110 may be a partitioned multi-strobe light source, which can sequentially emit sectorized annular light with differentiated sectors according to the preset light-emitting setting parameter. Certainly, the preset light source component 110 may alternatively be another light source that can emit the sectorized annular light.

The image acquisition component 10 and the preset light source component 110 in this embodiment of the present application are both disposed opposite to the target surface of the battery, and can be configured to directly acquire the image data of the target surface of the battery, to output the multi-channel image data corresponding to the target surface.

For example, when the preset light source component 110 is a partitioned multi-strobe light source, and the image acquisition component 10 is a hybrid data camera, an operation mode of the hybrid data camera may be a photometric stereo mode, so that the multi-channel image data (or referred to as a photometric stereo effect image) corresponding to the target surface can be obtained.

In this embodiment of the present application, the light source assembly may include a preset light source component, and the image acquisition component is disposed opposite to the target surface of the battery. The preset light source component may project the sectorized annular light onto the target surface according to the preset light-emitting setting parameter, so that the image acquisition component can acquire the image data of the target surface of the battery, and output the multi-channel image data corresponding to the target surface. Because the multi-channel image data is image data obtained under illumination of the sectorized annular light, and the multi-channel image data can present brightness changes of the target surface under illumination in different degrees, which is conducive to clearly presenting an electrolyte leakage condition on the target surface, the multi-channel image data corresponding to the target surface that is output in this embodiment of the present application is conducive to further improving accuracy of electrolyte leakage detection.

For ease of understanding, in the following embodiments of the present application, related content of the image acquisition component 10 and the light source assembly 11 is exemplarily described by using an example in which the image acquisition component 10 includes a hybrid data camera and the light source assembly 11 includes a preset light source component 110 (such as a programmable screen light source) and an optical mirror 111.

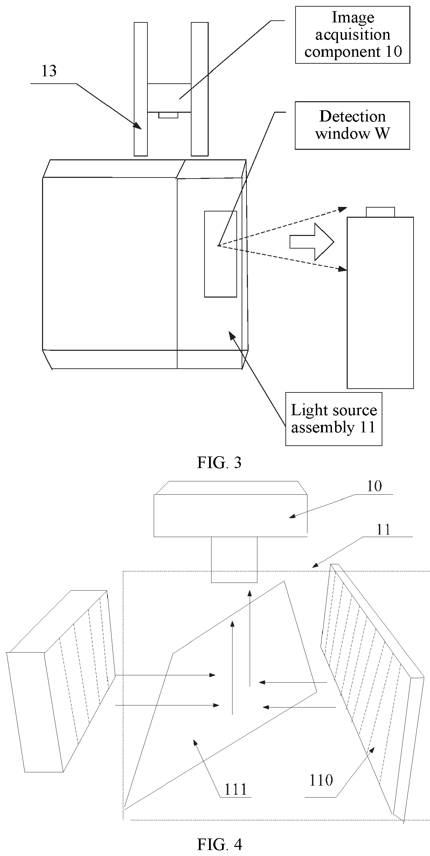

FIG. 3 is a schematic diagram of an appearance structure of an image acquisition component and a light source assembly according to some embodiments of the present application; and FIG. 4 is a schematic diagram of an internal structure of an image acquisition component and a light source assembly according to some embodiments of the present application. As shown in FIG. 3 and FIG. 4, an image acquisition component 10 may be a hybrid data camera, and may be disposed above a light source assembly 11 through a first mounting bracket 13. For example, the image acquisition component 10 may be mounted concentric to the light source assembly 11. It should be noted that, the image acquisition component 10 can move up and down on the first mounting bracket 13, so that a height of the image acquisition component 10 can be adjusted, thereby adjusting an image acquisition region of the image acquisition component 10.

As shown in FIG. 3, a detection window W may be provided on a target surface of the light source assembly 11 that faces a battery, to facilitate transfer of detection light.

As shown in FIG. 4, the light source assembly 11 may include a programmable screen light source 110 and an optical mirror 111. The optical mirror 111 may be a half-silvered mirror. The programmable screen light source 110 may project target detection light, and irradiates a target surface of a to-be-detected battery through the optical mirror 111. When the target detection light is projected onto the target surface of the battery, the target surface reflects a part of the target detection light (or reflected detection light for short) to the optical mirror 111, and the optical mirror 111 may reflect, to the image acquisition component 10, the reflected detection light reflected by the target surface, so that the image acquisition component 10 may indirectly acquire image data of the target surface of the battery by acquiring the reflected detection light reflected by the optical mirror 111, to obtain multi-channel image data corresponding to the target surface. In this way, an industrial personal computer 12 may perform defect detection (such as electrolyte leakage detection) on a surface of a specular or a quasi-specular reflective object based on the multi-channel image data.

It should be understood that, when the preset light source component 110 is a partitioned multi-strobe light source, the optical mirror 111 in FIG. 4 may be omitted, and the image acquisition component 10 is disposed toward the target surface of the battery.

In some embodiments, based on the foregoing embodiments, considering that electrolyte leakage may exist on a plurality of surfaces of the to-be-detected battery, to improve electrolyte leakage detection efficiency, in this embodiment of the present application, a battery electrolyte leakage detection system may include different image detection mechanisms (which may include, but is not limited to, an image acquisition component and a light source assembly) for different target surfaces of the battery. The different image detection mechanisms may be configured to detect multi-channel image data of different target surfaces of the to-be-detected battery, so that the industrial personal computer may separately perform electrolyte leakage detection on the different target surfaces of the battery according to the multi-channel image data of the different target surfaces of the battery, to obtain electrolyte leakage detection results of the different target surfaces of the battery. An electrolyte leakage detection result of any target surface of the battery may include, but is not limited to, whether an electrolyte leakage region exists on the target surface of the battery and corresponding information about the electrolyte leakage region when the electrolyte leakage region exists.

For ease of understanding, in this embodiment of the present application, an example in which the battery electrolyte leakage detection system includes two image detection mechanisms that are symmetrically disposed is used, and related content of the battery electrolyte leakage detection system is exemplarily described.

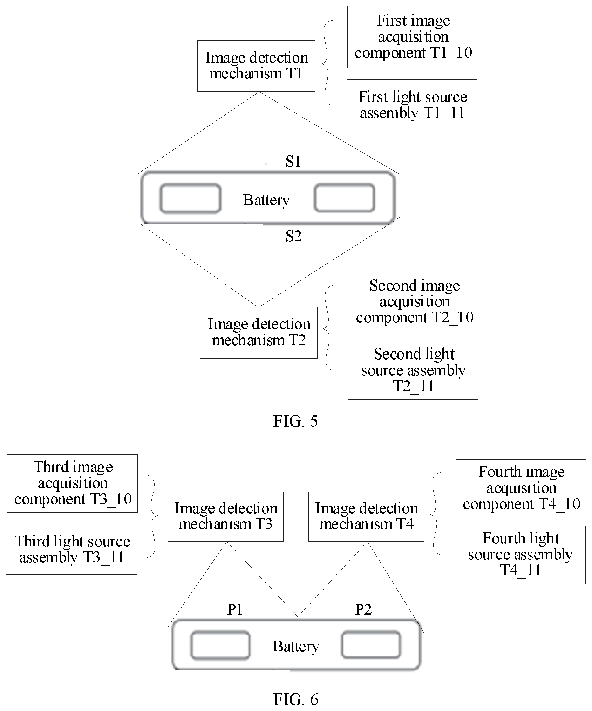

In some embodiments, FIG. 5 is a schematic diagram of a structure of a battery electrolyte leakage detection system according to some other embodiments of the present application. As shown in FIG. 5, the battery electrolyte leakage detection system may include a first image detection mechanism T1 and a second image detection mechanism T2 that are symmetrically disposed. The first image detection mechanism T1 may include a first image acquisition component T1_10 and a first light source assembly T1_11, and the second image detection mechanism T2 may include a second image acquisition component T2_10 and a second light source assembly T2_11. The first image acquisition component T1_10 may be disposed around the first light source assembly T1_11, and the second image acquisition component T2_10 may be disposed around the second light source assembly T2_11.

The first light source assembly T1_11 in this embodiment of the present application may face a first target surface S1 of a to-be-detected battery, and is configured to project first target detection light onto the first target surface S1 of the battery.

The second light source assembly T2_11 in this embodiment of the present application may face a second target surface S2 of a to-be-detected battery, and is configured to project second target detection light onto the second target surface S2 of the battery. The first target surface S1 and the second target surface S2 may be two surfaces that are symmetrically disposed in the battery. It should be understood that, FIG. 5 is shown by using an example in which the first target surface S1 and the second target surface S2 are two primary side surfaces of the battery. It should be noted that, the first target surface S1 and the second target surface S2 may alternatively be two surfaces that are asymmetrically disposed.

It should be noted that, for implementations of the first light source assembly T1_11 and the second light source assembly T2_11 in this embodiment of the present application, refer to related content of the light source assembly 11 in the foregoing embodiment, and details are not described herein again.

The first image acquisition component T1_10 in this embodiment of the present application may be configured to acquire image data of the first target surface S1 of the battery, and output multi-channel image data corresponding to the first target surface S1.

The second image acquisition component T2_10 in this embodiment of the present application may be configured to acquire image data of the second target surface S2 of the battery, and output multi-channel image data corresponding to the second target surface S2.

It should be noted that, for implementations of the first image acquisition component T1_10 and the second image acquisition component T2_10 in this embodiment of the present application, refer to related content of the image acquisition component 10 in the foregoing embodiment, and details are not described herein again.

An industrial personal computer 12 in this embodiment of the present application may be configured to perform electrolyte leakage detection on the battery according to the obtained multi-channel image data corresponding to the first target surface S1 and the obtained multi-channel image data corresponding to the second target surface S2, to obtain an electrolyte leakage detection result.

For example, the industrial personal computer 12 may perform electrolyte leakage detection on the first target surface S1 of the battery according to the multi-channel image data corresponding to the first target surface S1, to obtain an electrolyte leakage detection result of the first target surface S1, and perform electrolyte leakage detection on the second target surface S2 of the battery according to the multi-channel image data corresponding to the second target surface S2, to obtain an electrolyte leakage detection result of the second target surface S2.

It should be noted that, for an implementation in which the industrial personal computer 12 performs electrolyte leakage detection on any target surface of the battery according to multi-channel image data corresponding to the target surface, to obtain an electrolyte leakage detection result of the target surface, refer to related content in the foregoing embodiment, and details are not described herein again.

It should be understood that, in this embodiment of the present application, the two image detection mechanisms that are symmetrically disposed can synchronously detect multi-channel image data of different target surfaces of the battery, which is conducive to improving electrolyte leakage detection efficiency.

In conclusion, in this embodiment of the present application, the battery electrolyte leakage detection system includes the first image detection mechanism and the second image detection mechanism that are symmetrically disposed, where the first image detection mechanism is configured to obtain the multi-channel image data corresponding to the first target surface of the battery and the second image detection mechanism is configured to obtain the multi-channel image data corresponding to the second target surface of the battery, so that the industrial personal computer can separately perform electrolyte leakage detection on different target surfaces of the battery according to the multi-channel image data of the different target surfaces of the battery. It can be learned that, a symmetrical electrolyte leakage detection manner in this embodiment of the present application is conducive to improving electrolyte leakage detection efficiency.

In some embodiments, based on the foregoing embodiments, considering that image acquisition regions of image acquisition components in image detection mechanisms are limited, and when the image acquisition regions of the image acquisition components cannot cover all regions on the target surface of the battery, in this embodiment of the present application, the battery electrolyte leakage detection system may include a plurality of image detection mechanisms disposed side by side. Different image detection mechanisms may be configured to detect multi-channel image data of different regions on the target surface of the to-be-detected battery, so that the industrial personal computer may separately perform electrolyte leakage detection on the different regions of the target surface of the battery according to the multi-channel image data of the different regions, to obtain electrolyte leakage detection results of the different regions on the target surface, which is conducive to further improving accuracy of electrolyte leakage detection.

It should be understood that, image acquisition regions corresponding to different image detection mechanisms may be different, but image acquisition regions corresponding to adjacent image detection mechanisms may partially overlap.

For ease of understanding, in this embodiment of the present application, an example in which the battery electrolyte leakage detection system includes two image detection mechanisms that are disposed side by side is used, and related content of the battery electrolyte leakage detection system is exemplarily described.

In some embodiments, FIG. 6 is a schematic diagram of a structure of a battery electrolyte leakage detection system according to some other embodiments of the present application. As shown in FIG. 6, the battery electrolyte leakage detection system may include a third image detection mechanism T3 and a fourth image detection mechanism T4 that are disposed side by side. The third image detection mechanism T3 may include a third image acquisition component T3_10 and a third light source assembly T3_11, and the fourth image detection mechanism includes a fourth image acquisition component T4_10 and a fourth light source assembly T4_11. The third image acquisition component T3_10 may be disposed around the third light source assembly T3_11, and the fourth image acquisition component T4_10 may be disposed around the fourth light source assembly T4_11.

The third light source assembly T3_11 in this embodiment of the present application may face a first region P1 on a target surface of a to-be-detected battery, and is configured to project third target detection light to the first region P1 on the target surface of the battery.

The fourth light source assembly T4_11 in this embodiment of the present application may face a second region P2 on a target surface of a to-be-detected battery, and is configured to project fourth target detection light to the second region P2 on the target surface of the battery. The first region P1 and the second region P2 may be different regions along a length direction of the target surface. It should be understood that, in FIG. 6, a primary side surface of the battery may be used as the target surface. It should be noted that, the first region P1 and the second region P2 may alternatively be different regions obtained by dividing the target surface along the length direction. For example, the target surface is evenly divided into two regions along the length direction, one region is the first region P1, and the other region is the second region P2.

It should be noted that, for implementations of the third light source assembly T3_11 and the fourth light source assembly T4_11 in this embodiment of the present application, refer to related content of the light source assembly 11 in the foregoing embodiment, and details are not described herein again.

The third image acquisition component T3_10 in this embodiment of the present application may be configured to acquire image data of the first region P1 on the target surface, and output multi-channel image data corresponding to the first region P1 on the target surface.

The fourth image acquisition component T4_10 in this embodiment of the present application may be configured to acquire image data of the second region P2 on the target surface, and output multi-channel image data corresponding to the second region P2 on the target surface.

It should be noted that, for implementations of the third image acquisition component T3_10 and the fourth image acquisition component T4_10 in this embodiment of the present application, refer to related content of the image acquisition component 10 in the foregoing embodiment, and details are not described herein again.

The industrial personal computer 12 in this embodiment of the present application may be configured to perform electrolyte leakage detection on the battery according to the obtained multi-channel image data corresponding to the first region P1 on the target surface and the obtained multi-channel image data corresponding to the second region P2 on the target surface, to obtain an electrolyte leakage detection result.

For example, the industrial personal computer 12 may perform electrolyte leakage detection on the first region P1 of the target surface of the battery according to the multi-channel image data corresponding to the first region P1 of the target surface, to obtain an electrolyte leakage detection result of the first region P1 of the target surface, and perform electrolyte leakage detection on the second region P2 of the target surface of the battery according to the multi-channel image data corresponding to the second region P2 of the target surface, to obtain an electrolyte leakage detection result of the second region P2 of the target surface.

It should be noted that, for an implementation in which the industrial personal computer 12 performs electrolyte leakage detection on any region on the target surface of the battery according to multi-channel image data corresponding to the region on the target surface, to obtain an electrolyte leakage detection result of the region on the target surface, refer to related content of a case in which the industrial personal computer 12 performs electrolyte leakage detection on the target surface of the battery according to the multi-channel image data of the target surface in the foregoing embodiment, and details are not described herein again.

It should be understood that, in this embodiment of the present application, the two image detection mechanisms disposed side by side can synchronously detect the multi-channel image data of the different regions on the target surface of the battery, which is conducive to improving electrolyte leakage detection efficiency.

In conclusion, in this embodiment of the present application, the battery electrolyte leakage detection system includes the third image detection mechanism and the fourth image detection mechanism that are disposed side by side, where the third image detection mechanism is configured to obtain the multi-channel image data corresponding to the first region on the target surface of the battery, and the fourth image detection mechanism is configured to obtain the multi-channel image data corresponding to the second region on the target surface of the battery, so that the industrial personal computer may separately perform electrolyte leakage detection on the different regions of the target surface of the battery according to the multi-channel image data of the different regions of the target surface. It can be learned that, in this embodiment of the present application, a manner of performing region-based electrolyte leakage detection is used, which is conducive to further improving accuracy of electrolyte leakage detection.

It should be noted that, the manner of disposing the image detection mechanisms on opposite sides and the manner of disposing the image detection structures side by side in the foregoing embodiment of the present application may be combined with each other.

In some embodiments, based on the foregoing embodiments, considering that there are many preparation and detection procedures in a battery preparation process, to facilitate improving battery preparation and detection efficiency, a to-be-detected battery may be transferred through a transfer track, so that the to-be-detected battery may be transferred from an electrolyte leakage detection procedure to a next preparation and detection procedure (such as a film wrapping process) according to a preset transfer route (or referred to as a logistics line).

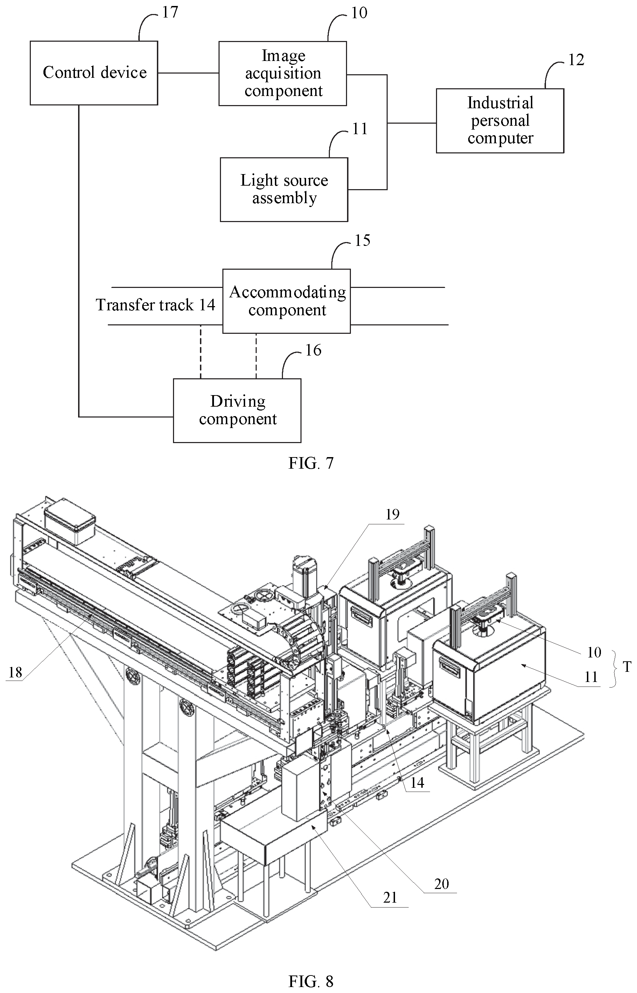

FIG. 7 is a schematic diagram of a structure of a battery electrolyte leakage detection system according to some other embodiments of the present application. As shown in FIG. 7, the battery electrolyte leakage detection system may further include a transfer track 14, an accommodating component 15, and a driving component 16 (or referred to as a first driving component).

For example, an image acquisition component 10 and a light source assembly 11 may be disposed around the transfer track 14, so that the light source assembly 11 may face a target surface of a to-be-detected battery, to project target detection light onto the target surface of the battery. The image acquisition component 10 may acquire image data of the target surface of the battery, and output multi-channel image data corresponding to the target surface.

The transfer track 14 in this embodiment of the present application may be configured to move the to-be-detected battery from an electrolyte leakage detection position to a film wrapping position, so that a film wrapping process and the like may be performed on the to-be-detected battery at the film wrapping position.

It should be noted that, when a preparation and detection procedure following an electrolyte leakage detection procedure is not the film wrapping process, the transfer track 14 may be configured to move the to-be-detected battery from the electrolyte leakage detection position to a position corresponding to the corresponding preparation and detection procedure.

The accommodating component 15 in this embodiment of the present application may be disposed on the transfer track 14, and is configured to carry the to-be-detected battery. For example, the accommodating component 15 may include, but is not limited to, a tray. Certainly, the accommodating component 15 may alternatively be in another form.

It should be understood that, the target surface of the battery may face a direction perpendicular to an extension direction of the transfer track, so that the light source assembly 11 disposed around the transfer track 14 may face the target surface of the to-be-detected battery, to project the target detection light onto the target surface of the battery.

The driving component 16 in this embodiment of the present application may be connected to the transfer track 14 or the accommodating component 15, to drive the accommodating component 15 to move along the transfer track, so that a battery located in the accommodating component 15 may move along a transfer line.

For example, any driving component in the embodiments of the present application may include, but is not limited to, a motor.

For example, the driving component may be connected to the transfer track 14, and drives the transfer track 14 to move, so as to drive the accommodating component 15 to move along the transfer track 14. For another example, the driving component may be connected to the accommodating component 15, and drives the accommodating component 15 to move along the transfer track 14.

Certainly, the driving component may alternatively drive, in another manner, the accommodating component 15 to move along the transfer track 14.

In conclusion, the battery electrolyte leakage detection system in this embodiment of the present application may further include a transfer track, an accommodating component that is disposed on the transfer track and configured to carry a to-be-detected battery, and a driving component connected to the transfer track or the accommodating component. The driving component can drive the accommodating component to move along the transfer track, so as to move the to-be-detected battery from the electrolyte leakage detection position to the film wrapping position. It can be learned that, in this embodiment of the present application, the transfer track, the accommodating component, and the driving component are combined, so that the to-be-detected battery can be intelligently transported according to a preset transfer line, and electrolyte leakage detection may be sequentially performed on different to-be-detected batteries, which is conducive to improving efficiency of electrolyte leakage detection.

In some embodiments, based on the foregoing embodiments, considering linked control on the driving component and/or the image acquisition component, as shown in FIG. 7, the battery electrolyte leakage detection system in this embodiment of the present application may further include a control device 17 separately connected to the driving component 16 and the image acquisition component 10. For example, the control device may include, but is not limited to, a programmable logic controller (Programmable Logic Controller, PLC) device.

The control device 17 in this embodiment of the present application may be configured to control the driving component 16 to drive the accommodating component 15 to move to the corresponding electrolyte leakage detection position along the transfer track 14, and control the image acquisition component 10 to detect the multi-channel image data corresponding to the target surface of the battery.

For example, the control device 17 may control the driving component 16 to drive the accommodating component 15 to move to the corresponding electrolyte leakage detection position along the transfer track 14, and when the accommodating component 15 moves to the corresponding electrolyte leakage detection position, the control device 17 may control the image acquisition component 10 to detect multi-channel image data corresponding to a target surface of a battery located in the accommodating component 15.

For example, a manner in which a position positioning component may be disposed at an electrolyte leakage detection position corresponding to the image acquisition component 10 is used. When the accommodating component 15 moves to the corresponding electrolyte leakage detection position, the position positioning component may send arrival indication information to the control device, so that the control device can control the driving component 16 to stop driving the accommodating component 15 to move along the transfer track 14, and control the image acquisition component 10 to detect the multi-channel image data corresponding to the target surface of the battery. The position positioning component may include, but is not limited to, a position sensor.

Certainly, the control device may further determine, in another manner, whether the accommodating component 15 moves to the corresponding electrolyte leakage detection position.

It should be understood that, in a case in which corresponding image detection mechanisms are symmetrically disposed on two sides of the transfer track of the battery, when determining that the accommodating component 15 moves to an electrolyte leakage detection position corresponding to the symmetrically disposed image detection mechanisms, the control device may control the symmetrically disposed image detection mechanisms to respectively detect the corresponding multi-channel image data corresponding to the target surface.

In a case in which a plurality of image detection mechanisms are disposed along the transfer track of the battery, when determining that the accommodating component 15 moves to an electrolyte leakage detection position corresponding to a specific image detection mechanism, the control device may control the corresponding image detection mechanism to detect the multi-channel image data of the corresponding region of the corresponding target surface.

In conclusion, in this embodiment of the present application, the battery electrolyte leakage detection system is provided with a control device separately connected to the driving component and the image acquisition component. The control device may be configured to control the driving component to drive the accommodating component to move to the corresponding electrolyte leakage detection position along the transfer track, and control the image acquisition component to detect the multi-channel image data corresponding to the target surface of the battery. It can be learned that, in this embodiment of the present application, linked control on the driving component and the image acquisition component can be implemented through the control device, so that control flexibility of the battery electrolyte leakage detection system can be improved, which is conducive to improving efficiency of electrolyte leakage detection.

In some embodiments, based on the foregoing embodiment, as shown in FIG. 7, the control device 17 in this embodiment of the present application may be further connected to the industrial personal computer 12. The control device 17 may be further configured to receive the electrolyte leakage detection result sent by the industrial personal computer 12, and determine, according to comparison between the electrolyte leakage detection result and a preset defect condition, whether the to-be-detected battery meets a preset production requirement. The preset defect condition may be used to indicate a plurality of preset electrolyte leakage defect conditions that do not meet the preset production requirement.

For example, the electrolyte leakage detection result in this embodiment of the present application may include, but is not limited to, whether an electrolyte leakage region exists on the target surface of the battery and information about the corresponding electrolyte leakage region when the electrolyte leakage region exists.

For example, if the electrolyte leakage region information of the target surface of the battery that is indicated by the electrolyte leakage detection result matches information about an electrolyte leakage region corresponding to a specific preset electrolyte leakage defect condition, the control device may determine that the battery does not meet the preset production requirement. If the information about the electrolyte leakage region on the target surface of the battery that is indicated by the detection result does not match information about electrolyte leakage regions corresponding to all the preset electrolyte leakage defect conditions, the control device may determine that the battery meets the preset production requirement.

It can be learned that, in this embodiment of the present application, the control device determines, according to comparison between the electrolyte leakage detection result and the preset defect condition, whether the to-be-detected battery meets the preset production requirement, to perform a preset operation in a timely manner when determining that the battery does not meet the preset production requirement, so as to relieve a case in which the battery is returned to a procedure for rework because the battery does not meet the production requirement, which is conducive to improving production efficiency of the battery. The preset operation may include, but is not limited to, outputting electrolyte leakage alarm prompt information or controlling a screening mechanism in a battery electrolyte leakage detection system to move the battery to a preset waste region. For example, the electrolyte leakage alarm prompt information may include, but is not limited to, sound alarm prompt information and/or light alarm prompt information.

It should be noted that, in this embodiment of the present application, the industrial personal computer 12 may also determine, according to comparison between the electrolyte leakage detection result and the preset defect condition, whether the to-be-detected battery meets the preset production requirement, and send the electrolyte leakage detection result to the control device. The electrolyte leakage detection result may be further used for indicating whether the battery meets the preset production requirement. It should be understood that, if the electrolyte leakage detection result indicates that the battery meets the preset production requirement, the electrolyte leakage detection result may also be referred to as an OK result. If the electrolyte leakage detection result indicates that the battery does not meet the preset production requirement, the electrolyte leakage detection result may also be referred to as an NG result.

In some embodiments, based on the foregoing embodiments, for ease of understanding, in this embodiment of the present application, an entire structure of the battery electrolyte leakage detection system is exemplarily described with reference to a transfer track, an accommodating component, an image detection mechanism, and the like and by using an example in which the image detection mechanisms are symmetrically disposed.

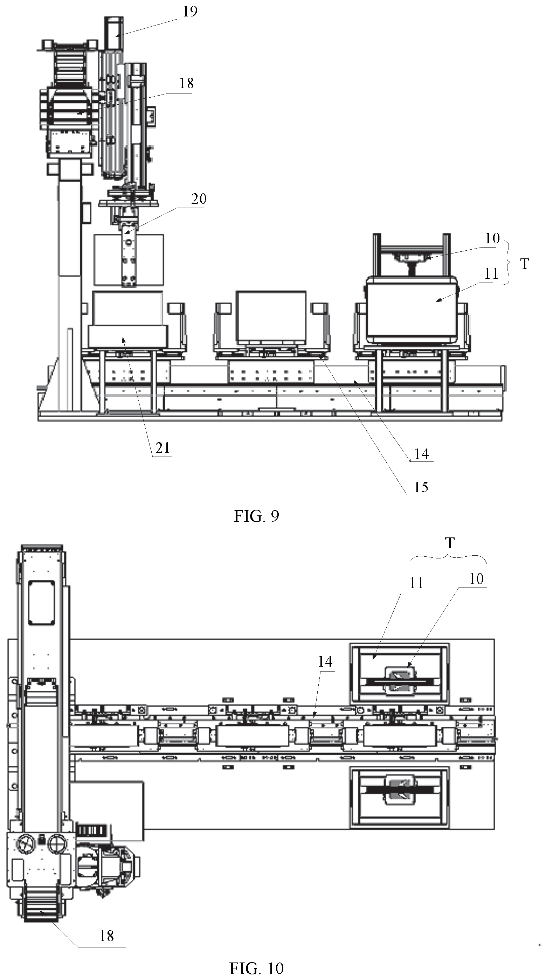

FIG. 8 is a schematic diagram of a three-dimensional structure of a battery electrolyte leakage detection system according to some embodiments of the present application; FIG. 9 is a schematic diagram of a front view structure of a battery electrolyte leakage detection system according to some embodiments of the present application; and FIG. 10 is a schematic diagram of a top view structure of a battery electrolyte leakage detection system according to some embodiments of the present application. As shown in FIG. 8 to FIG. 10, the battery electrolyte leakage detection system may include, but is not limited to, a transfer track 14, an accommodating component 15, and two image detection mechanisms T disposed on opposite sides. Each image detection mechanism T may include, but is not limited to, an image acquisition component 10 and a light source assembly 11. The accommodating component 15 may be disposed on the transfer track 14, and is configured to carry a to-be-detected battery. Two image detection mechanisms T may be symmetrically disposed on two sides of the transfer track 14, so that a light source assembly 11 in each image detection mechanism T can face a target surface corresponding to the to-be-detected battery, to project target detection light onto the target surface of the battery. In addition, the image acquisition component 10 in the image detection mechanism T can acquire image data of the target surface of the battery, and output multi-channel image data corresponding to the target surface.

In some embodiments, based on the foregoing embodiment, considering that a battery that does not meet a preset production requirement needs to be screened out, the control device in this embodiment of the present application may control, when determining that the battery does not meet the preset production requirement, the screening mechanism to move the battery to a preset waste region. The preset waste region may be used for storing the battery that does not meet the preset production requirement. For example, the preset waste region may include, but is not limited to, a waste box disposed around the transfer track 14 of the battery.

As shown in FIG. 8 and FIG. 9, the battery electrolyte leakage detection system in this embodiment of the present application may further include a sliding rail 18, a cantilever 19, and a grabbing component 20.

The sliding rail 18 in this embodiment of the present application may be disposed above the transfer track 14 through a support frame, and a front end of the cantilever 19 is movably disposed on the sliding rail 18, to flexibly move a position of the cantilever 19. An extension direction of the sliding rail 18 may be perpendicular to an extension direction of the transfer track 14.

The grabbing component 20 in this embodiment of the present application may be disposed at a rear end of the cantilever 19, to move a position under driving of the cantilever 19.

The control device in this embodiment of the present application may be specifically configured to: when determining that the to-be-detected battery does not meet the preset production requirement, control the cantilever 19 to move above the battery along the sliding rail 18, and control the grabbing component 20 to grab the battery along an extension direction of the cantilever 19, to move the battery to a preset waste region 21 disposed near the transfer track 14.

For example, the control device may control, by controlling a second driving component (not shown in the figure) connected to the cantilever 19 or the sliding rail 18, the cantilever 19 to move along the sliding rail 18.

For example, the second driving component may be connected to the cantilever 19, and drives the cantilever 19 to move along the sliding rail 18. For another example, the second driving component may be connected to the sliding rail 18, and drives the sliding rail 18 to move, so as to drive the cantilever 19 to move along the sliding rail 18.

Certainly, the control device may alternatively control, in another manner, the cantilever 19 to move along the sliding rail 18.

For example, the control device may control, by controlling a third driving component (not shown in the figure) connected to the grabbing component 20, the grabbing component 20 to grab the battery along the extension direction of the cantilever 19.

Certainly, the control device may alternatively control, in another manner, the grabbing component 20 to grab the battery along the extension direction of the cantilever 19.

It should be understood that, the control device may be further configured to: when determining that the battery meets the preset production requirement, control the transfer track 14 to continue to transfer the battery to an electrolyte leakage detection position corresponding to a next image detection mechanism or a next preparation and detection procedure.

In conclusion, the battery electrolyte leakage detection system in this embodiment of the present application may further include: a sliding rail, a cantilever, and a grabbing component that are disposed above the transfer track. The sliding rail is disposed above the transfer track through a support frame, a front end of the cantilever is movably disposed on the sliding rail, and the grabbing component may be disposed at a rear end of the cantilever. When it is determined that the to-be-detected battery does not meet the preset production requirement, the cantilever is controlled, through the control device, to move above the battery along the sliding rail, and the grabbing component is controlled to grab the battery along the extension direction of the cantilever, to move the battery to the preset waste region, so that a battery that does not meet the preset production requirement can be flexibly filtered out, to perform corresponding processing on the battery that does not meet the preset production requirement, and transfer the battery that meets the preset production requirement to a next preparation and detection procedure. This can relieve a case in which the battery is returned to a procedure for rework because the battery does not meet the production requirement, thereby facilitating improving production efficiency of the battery.

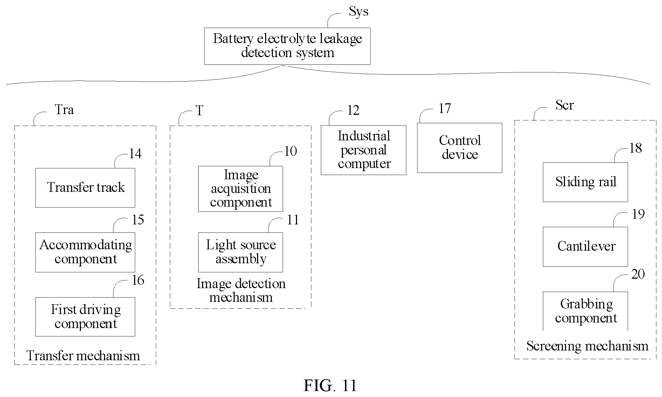

In some embodiments, FIG. 11 is an overall schematic diagram of a battery electrolyte leakage detection system according to some embodiments of the present application. As shown in FIG. 11, the battery electrolyte leakage detection system Sys in this embodiment of the present application may include, but is not limited to: a transfer mechanism Tra, an image detection mechanism T, an industrial personal computer 12, a control device 17, and a screening mechanism Scr.

For example, at least one of the following may be set in the industrial personal computer 12 in this embodiment of the present application: preset electrolyte leakage detection software, preset light source setting software, and a manufacturing execution system (Manufacturing Execution System, MES). The preset electrolyte leakage detection software may be used for performing electrolyte leakage detection on the battery according to the multi-channel image data corresponding to the target surface of the battery. The preset light source setting software may be used for setting a light-emitting setting parameter (for example, a light-emitting type and/or a light-emitting period) in the light source assembly 11. The MES may include, but is not limited to, production record information of each battery.

For example, the transfer mechanism Tra may include, but is not limited to: a transfer track 14, an accommodating component 15, and a first driving component 16. The image detection mechanism T may include, but is not limited to, an image acquisition component 10 and a light source assembly 11. The screening mechanism Scr may include, but is not limited to, a sliding rail 18, a cantilever 19, and a grabbing component 20.

With reference to FIG. 8 and FIG. 9, the light source assembly 11 in this embodiment of the present application may be disposed around the sliding rail 18 through a second mounting bracket (not shown in FIG. 8 and FIG. 9), so that the light source assembly 11 may be disposed opposite to the target surface of the battery.

It should be noted that, the image acquisition component 10 in this embodiment of the present application has a wide compatibility range in terms of precision, a wide compatibility range in terms of a field of view, and is compatible with a higher detection requirement. To satisfy electrolyte leakage detection, precision in an XY direction of the image acquisition component 10 in this embodiment of the present application needs to be at least 0.009 mm. In addition, to be compatible with batteries of different sizes, in this embodiment of the present application, the battery is designed to move, and the image acquisition component 10 may perform detection once or a plurality of times.

In this embodiment of the present application, in a single-station battery feeding manner, although detection space reserved for an image detection mechanism is limited, a volume occupied by the image detection mechanism is small in a manner in which the two primary side surfaces simultaneously perform acquiring, and a space requirement can be satisfied.

For example, for requirements that an electrolyte leakage detection precision height is greater than or equal to 0.1 mm and an electrolyte leakage detection area is greater than or equal to 0.25 mm², precision of the image acquisition component 10 in this embodiment of the present application in an XY direction needs to reach 0.009 mm.

For another example, for electrolyte leakage defect detection, a production line requires 15 mm below a top cover surface of the battery, and a size of a field of view of the image acquisition component 10 in this embodiment of the present application needs to reach at least 50*30 mm.

It should be noted that, for related content of components in this embodiment of the present application, refer to related content in the foregoing embodiment, and details are not described herein again.

In some embodiments, based on the foregoing embodiment, for ease of understanding, in this embodiment of the present application, a disposing manner of the image detection mechanism is exemplarily described by using an example in which the image detection mechanisms are disposed on opposite sides and a manner in which the image detection structures are disposed side by side with reference to the transfer track 14.

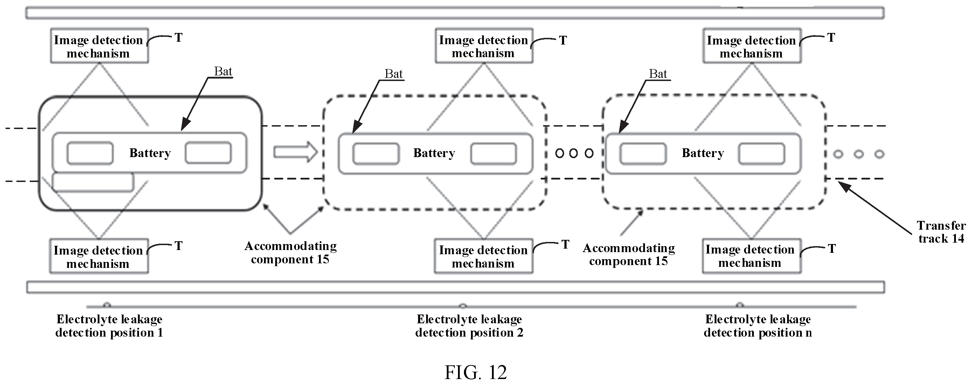

FIG. 12 is a schematic diagram of a disposing manner of an image detection mechanism according to an embodiment of the present application. As shown in FIG. 12, n groups of symmetric image detection mechanisms T may be disposed along a transfer track 14. Different image detection mechanisms T may be respectively configured to detect multi-channel image data of a corresponding region on a target surface of a corresponding battery Bat. For example, a control device may control a first driving component in a transfer mechanism, to drive an accommodating component 15 carrying a battery to move along the transfer track 14. When determining that the accommodating component 15 moves to an electrolyte leakage detection position corresponding to a specific image detection mechanism T, the control device may control the first driving component to stop running, control an image detection mechanism T corresponding to the electrolyte leakage detection position to detect the multi-channel image data of the corresponding region on the corresponding target surface, and send the multi-channel image data to the industrial personal computer 12.

It should be understood that, when the battery Bat is moved to an electrolyte leakage detection position 1 of a first group of symmetric image detection mechanisms T, the first group of symmetric image detection mechanisms T may detect the multi-channel image data of the corresponding region on the corresponding target surface; when the battery Bat is moved to an electrolyte leakage detection position 2 of a second group of symmetric image detection mechanisms T, the second group of symmetric image detection mechanisms T may detect the multi-channel image data of the corresponding region on the corresponding target surface; and when the battery Bat is moved to an electrolyte leakage detection position n of an n^{th} group of symmetric image detection mechanisms T, the n^{th} group of symmetric image detection mechanisms T may detect the multi-channel image data of the corresponding region on the corresponding target surface, where n may be an integer greater than 2.

For example, when determining that the accommodating component 15 moves to the electrolyte leakage detection position 1 corresponding to the first group of image detection mechanisms T, the control device may control the first driving component to stop running, and control the first group of the image detection mechanisms T to detect the multi-channel image data of the corresponding region on the corresponding target surface.

Further, the industrial personal computer 12 may perform electrolyte leakage detection on the battery according to the multi-channel image data, to obtain an electrolyte leakage detection result, and send the electrolyte leakage detection result to the control device.

Further, the control device determines, according to the electrolyte leakage detection result, whether the battery meets the preset production requirement. It should be understood that, if it is determined that the battery meets the preset production requirement, the electrolyte leakage detection result may also be referred to as an OK result; and if it is determined that the battery does not meet the preset production requirement, the electrolyte leakage detection result may also be referred to as an NG result.

If it is determined that the battery meets the preset production requirement, the control device controls the first driving component in the transfer mechanism, to drive the accommodating component 15 carrying the battery to continue to move along the transfer track 14 until the accommodating component 15 moves to an electrolyte leakage detection position corresponding to a next image detection mechanism T or moves to a next preparation and detection procedure. It should be noted that, when the accommodating component 15 moves to the electrolyte leakage detection position corresponding to the next image detection mechanism T, refer to an electrolyte leakage detection process in the foregoing embodiment, and details are not described herein again.

If it is determined that the battery does not meet the preset production requirement, the control device may control a screening mechanism to move the battery to a preset waste region.

It should be noted that, when obtaining multi-channel image data detected by all the image detection mechanisms T, the industrial personal computer 12 may also separately perform electrolyte leakage detection on the battery according to multi-channel image data of the image detection mechanisms T, to obtain a corresponding electrolyte leakage detection result.

In conclusion, in the embodiments of the present application, before a blue film wrapping process is performed on the battery, multi-channel image data of a corresponding region on the target surface corresponding to the battery may be detected through an image detection mechanism, and electrolyte leakage detection may be performed on the battery with reference to a machine vision algorithm. In addition, a battery leakage detection procedure in this embodiment of the present application can be developed into an effective standardized procedure, which is conducive to improving stability and consistency of electrolyte leakage detection.

For example, when the target surface is a primary side surface of the battery, in this embodiment of the present application, an electrolyte leakage defect (a defect size may be N*N mm², and a detection precision length may be greater than or equal to preset precision) in a region within a distance less than or equal to a preset length from a weld joint of a top cover may be detected. The preset length may include, but is not limited to, 15 mm, N may include, but is not limited to, 2, and the preset precision may include, but is not limited to, 2 mm.

For ease of understanding, steps of battery electrolyte leakage detection procedure CT and corresponding time consumption are exemplarily introduced in the following embodiments of the present application.

**Table 1 is a schematic table of battery electrolyte leakage detection procedure CT provided in an embodiment of the present application.**

| Procedure | Complete an action | Function introduction | Time consumption | Cumulative duration |
|---|---|---|---|---|
| 1 | Control an image acquisition component to acquire | An image acquisition component acquires multi-channel image data | 25 | 25 |
| 2 | Obtain multi-channel image data | Obtain multi-channel image data | 40 | 65 |
| 3 | Transfer image data to an algorithm | Transfer a storage address of image data | 5 | 70 |
| 4 | Image format conversion | Image format conversion | 5 | 75 |
| 5 | Processing of an electrolyte leakage detection algorithm | Electrolyte leakage detection | 150 to 180 | 225 to 255 |
| 6 | Interface display | Display an electrolyte leakage detection result and an image | 5 | 260 |
| 7 | Save a result | Save an electrolyte leakage detection result and an image | 30 | 290 |
| 8 | OK action or NG action | Continue to transfer/screen out waste | 5 | 295 |
| Total CT for design | | | | 270 ms to 300 ms |

Table 1 is a schematic table of battery electrolyte leakage detection procedure CT provided in an embodiment of the present application. As shown in Table 1, starting from a time point at which a control device controls an image acquisition component to acquire multi-channel image data corresponding to a target surface to a time point at which the control device performs an OK action or an NG action, a procedure in which more time is consumed is that an industrial personal computer performs an electrolyte leakage detection and processing procedure, and total cumulative duration may be 270 ms to 300 ms. It can be learned that, the efficiency of the battery electrolyte leakage detection procedure in this embodiment of the present application is relatively high.

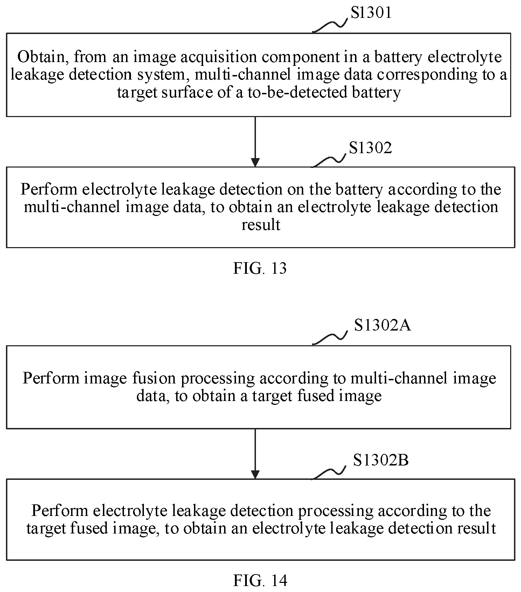

In some embodiments, FIG. 13 is a schematic flowchart of a battery electrolyte leakage detection method according to some embodiments of the present application. This embodiment of the present application is described by using an example in which the method is applied to the industrial personal computer in the foregoing battery electrolyte leakage detection system embodiments. For related content of the battery electrolyte leakage detection system in this embodiment of the present application, refer to related content in the foregoing embodiments, and details are not described herein again. As shown in FIG. 13, the method in the embodiments of the present application may include the following steps.

Step S1301: Obtain, from an image acquisition component in the battery electrolyte leakage detection system, multi-channel image data corresponding to a target surface of a to-be-detected battery.

In this step, the industrial personal computer may obtain the multi-channel image data corresponding to the target surface of the battery detected by an image detection mechanism in the battery electrolyte leakage detection system.

In a possible implementation, the industrial personal computer may receive the multi-channel image data that is sent by the image acquisition component or an intermediate device and that corresponds to the target surface of the battery.

In another possible implementation, the industrial personal computer may receive address information that is sent by the image acquisition component or an intermediate device and that is used for storing the multi-channel image data, and obtain, according to the address information, the multi-channel image data corresponding to the target surface of the battery.

Certainly, the industrial personal computer may alternatively obtain, in another manner, the multi-channel image data corresponding to the target surface of the to-be-detected battery.

Step S1302: Perform electrolyte leakage detection on the battery according to the multi-channel image data, to obtain an electrolyte leakage detection result.

In this step, the industrial personal computer may perform electrolyte leakage detection on the battery according to the multi-channel image data corresponding to the target surface of the battery, to obtain the electrolyte leakage detection result.

In a possible implementation, the industrial personal computer may perform image fusion processing on image data of some channels or image data of all channels in the multi-channel image data corresponding to the target surface, to obtain a target fused image, and perform preset electrolyte leakage detection processing according to the target fused image, to obtain an electrolyte leakage detection result. The target fused image may include, but is not limited to, a 2D image and/or a 2.5D image, and may provide more abundant and varied electrolyte leakage conditions.

For example, the industrial personal computer may perform image fusion processing on grayscale image data, depth image data, X-phase image data, and Y-phase image data in the multi-channel image data corresponding to the target surface, to obtain the target fused image.

In another possible implementation, the industrial personal computer may input the multi-channel image data corresponding to the target surface into a first preset electrolyte leakage detection model, to obtain the electrolyte leakage detection result.

Certainly, the industrial personal computer may alternatively perform electrolyte leakage detection on the battery in another manner according to the multi-channel image data corresponding to the target surface of the battery.

The image data of each channel may be used to indicate an electrolyte leakage condition of the target surface of the battery in the channel, that is, the multi-channel image data may be used to indicate the electrolyte leakage condition of the target surface in a plurality of channels, the multi-channel image data corresponding to the target surface in this embodiment of the present application can more clearly and completely indicate the electrolyte leakage condition of the target surface of the battery. Therefore, the industrial personal computer can more accurately obtain an electrolyte leakage detection result of the target surface of the battery according to the multi-channel image data.

In conclusion, in this embodiment of the present application, the industrial personal computer obtains, from the image acquisition component in the battery electrolyte leakage detection system, the multi-channel image data corresponding to the target surface of the to-be-detected battery, and performs electrolyte leakage detection on the battery according to the multi-channel image data, to obtain the electrolyte leakage detection result. In comparison with a manual visual inspection manner in the related art, the multi-channel image data corresponding to the target surface in this embodiment of the present application can more clearly and completely indicate an electrolyte leakage condition on the target surface of the battery. Therefore, in a manner of performing electrolyte leakage detection according to the multi-channel image data, an electrolyte leakage detection result of the target surface of the battery can be more accurately obtained, and accuracy of the electrolyte leakage detection result of the target surface of the battery is relatively high.

In some embodiments, based on the foregoing embodiments, the industrial personal computer in this embodiment of the present application may further send the electrolyte leakage detection result to the control device in the battery electrolyte leakage detection system, to indicate the control device to determine, according to comparison between the electrolyte leakage detection result and the preset defect condition, whether the to-be-detected battery meets the preset production requirement, to perform a preset operation in a timely manner when determining that the battery does not meet the preset production requirement, so as to relieve a case in which the battery is returned to a procedure for rework because the battery does not meet the production requirement, which is conducive to improving production efficiency of the battery. For example, the preset defect condition may be used for indicating a plurality of preset electrolyte leakage defect conditions that do not meet the preset production requirement

In some embodiments, FIG. 14 is a schematic flowchart of a battery electrolyte leakage detection method according to some other embodiments of the present application. Based on the foregoing embodiments, in this embodiment of the present application, related content of "performing electrolyte leakage detection on the battery according to the multi-channel image data, to obtain an electrolyte leakage detection result" in step S1302 is exemplarily described. As shown in FIG. 14, the method in the embodiments of the present application may include the following steps.

Step S1302A: Perform image fusion processing according to the multi-channel image data, to obtain a target fused image.

In this step, the industrial personal computer may perform image fusion processing on image data of some channels or image data of all channels in the multi-channel image data corresponding to the target surface, to obtain a target fused image.

In a possible implementation, image fusion processing is performed on the multi-channel image data, to obtain an initial fused image; and if uniformity of grayscale values of different pixels in the initial fused image is less than preset uniformity, flat field correction processing is performed on the initial fused image, to obtain the target fused image.

Flat field correction processing in the embodiments of the present application refers to an image processing technology used for improving digital imaging quality, and a main objective of flat field correction processing is to correct brightness or color non-uniformity in an image caused by various reasons, so as to improve image quality. After flat field correction processing is performed on the image, brightness of different regions is more uniform, and artifacts, noise, and other influences are reduced. Usually, a principle of flat field correction may be based on correction by using a reference image referred to as a "flat field image" or a "flat field image" (Flat Field Image). The reference image is obtained by a uniform light source illuminating on a sensor, and captures response non-uniformity of the sensor and illumination differences in different regions.

In this implementation, the industrial personal computer may perform image fusion processing on image data of some channels or image data of all channels in the multi-channel image data, to obtain an initial fused image.

Further, the industrial personal computer determines whether uniformity of grayscale values of different pixels in the initial fused image is not less than preset uniformity, that is, determines whether the grayscale values of the different pixels in the initial fused image are evenly distributed. If the uniformity of the grayscale values of the different pixels in the initial fused image is less than the preset uniformity, that is, the grayscale values of the different pixels in the initial fused image are unevenly distributed, the industrial personal computer may perform flat field correction processing on the initial fused image, to obtain a target fused image (or referred to as a background consistency image), so that the grayscale values of the different pixels in the target fused image are evenly distributed (or referred to as a more balanced image). In this way, electrolyte leakage detection processing can be more accurately performed according to the target fused image.

It should be understood that, if the uniformity of the grayscale values of the different pixels in the initial fused image is not less than the preset uniformity, that is, the grayscale values of the different pixels in the initial fused image are evenly distributed, the industrial personal computer may use the initial fused image as the target fused image.

In another possible implementation, the industrial personal computer may directly perform image fusion processing on the multi-channel image data corresponding to the target surface, to obtain a target fused image, without determining whether grayscale values of different pixels in an initial fused image are evenly distributed.

Certainly, the industrial personal computer may alternatively perform image fusion processing in another manner according to the multi-channel image data, to obtain the target fused image.

Step S1302B: Perform electrolyte leakage detection processing according to the target fused image, to obtain the electrolyte leakage detection result.

In a possible implementation, the industrial personal computer may input the target fused image into a second preset electrolyte leakage detection model, to obtain the electrolyte leakage detection result.

In another possible implementation, the industrial personal computer may perform preset processing on the target fused image, to obtain a target binary image, and determine the electrolyte leakage detection result according to the target binary image.

For example, preset processing in this embodiment of the present application may include, but is not limited to, at least one of the following: image differentiation processing, filtering processing, and binarization processing.

For example, a pixel value of a pixel in a non-electrolyte leakage region in the target binary image may be a first preset value, and a pixel value of a pixel of an electrolyte leakage region in the target binary image may be a second preset value, where the second preset value is greater than the first preset value. For example, the pixel in the electrolyte leakage region in the target binary image is a white pixel, and the pixel in the non-electrolyte leakage region is a black pixel.

For ease of understanding, related content of "performing preset processing on the target fused image, to obtain a target binary image" is exemplarily described in the following embodiments of the present application.

For example, image differential processing is performed according to the target fused image and the initial fused image, to identify a defect region in the target fused image; and binarization processing is performed on the defect region and the non-defect region in the target fused image, to obtain the target binary image.

In this embodiment of the present application, the industrial personal computer may perform image differential processing according to the target fused image and the initial fused image, to identify the defect region in the target fused image, so as to preliminarily separate the defect region from the non-defect region.

Image differential processing in the embodiments of the present application is an image processing technology used for analyzing and processing a pixel intensity change in an image. Usually, a difference between the current image and a fixed background image may be calculated, or a difference between two consecutive images may be calculated. It should be understood that, the initial fused image in this embodiment of the present application may be equivalent to the fixed background image, and a difference between the target fused image and the initial fused image is calculated.

Further, the industrial personal computer may perform binarization processing on the defect region and a non-defect region in the target fused image, to obtain the target binary image. The defect region and the non-defect region in the target binary image are clearly defined.

It should be noted that, considering that noise points may exist in a detected image, the industrial personal computer may perform filtering processing on the target fused image and the initial fused image separately, to filter out noise points in a corresponding image, and then perform image difference processing on the target fused image and the initial fused image after filtering. Alternatively, the industrial personal computer may perform filtering processing on the identified defect region and non-defect region in the target fused image, to filter out noise points in a corresponding region.

For another example, the industrial personal computer inputs the target fused image into a preset processing model, to obtain the target binary image.

Certainly, the industrial personal computer may alternatively perform preset processing on the target fused image in another manner, to obtain the target binary image.

For ease of understanding, related content of "determining the electrolyte leakage detection result according to the target binary image" is exemplarily described in the following embodiments of the present application.

For example, the industrial personal computer may perform comprehensive detection on the target binary image according to a preset electrolyte leakage detection rule, to determine whether an electrolyte leakage region exists in the target binary image.

The preset electrolyte leakage detection rule in this embodiment of the present application may be used for indicating a plurality of pieces of preset electrolyte leakage defect reference information. The preset electrolyte leakage defect reference information may include, but is not limited to, at least one of the following: an electrolyte leakage defect reference size, an electrolyte leakage defect reference grayscale value, and electrolyte leakage defect reference confidence. It should be understood that, the preset electrolyte leakage detection rule may be preconfigured by a user, or may be obtained from another device. This is not limited in this embodiment of the present application.

In this embodiment of the present application, the industrial personal computer may perform parsing processing on the target binary image, identify defect information (such as a defect size, a defect grayscale value, and/or a defect position) of defect regions in the target binary image, and separately match defect information of the defect regions with a plurality of pieces of preset electrolyte leakage defect reference information indicated by the preset electrolyte leakage detection rule, to determine whether a defect region that matches any preset electrolyte leakage defect reference information indicated by the preset electrolyte leakage detection rule exists in the defect regions, so as to filter out a non-electrolyte leakage region (also referred to as a pseudo-electrolyte leakage region) in the defect regions in the target binary image.

For example, if a defect size corresponding to any defect region belongs to an electrolyte leakage defect reference size in any preset electrolyte leakage defect reference information indicated by the preset defect detection rule, a grayscale value corresponding to any defect region belongs to an electrolyte leakage defect reference grayscale value in any preset electrolyte leakage defect reference information indicated by the preset defect detection rule, and/or confidence corresponding to any defect region belongs to electrolyte leakage defect reference confidence in any preset electrolyte leakage defect reference information indicated by the preset defect detection rule, the industrial personal computer may determine that defect information of the defect region matches the preset electrolyte leakage defect reference information indicated by the preset defect detection rule, to determine the defect region as the electrolyte leakage region.

It should be noted that, the industrial personal computer may further obtain, by performing parsing processing on the target binary image, information such as confidence corresponding to the defect regions in the target binary image.

For another example, the industrial personal computer may extract a region image including the defect regions from the target binary image; and input the region image into the preset electrolyte leakage detection model (or referred to as a third preset electrolyte leakage detection model), to obtain whether an electrolyte leakage region exists in the region image.

In this embodiment of the present application, the industrial personal computer may perform parsing processing on the target binary image, identify the defect regions in the target binary image, and extract the region image including the defect regions from the target binary image. Further, the industrial personal computer may input the region image into the third preset electrolyte leakage detection model, to obtain whether the electrolyte leakage region exists in the region image and information about the corresponding electrolyte leakage region when the electrolyte leakage region exists.

For another example, the industrial personal computer may perform comprehensive detection on the target binary image according to the preset electrolyte leakage detection rule, to obtain a first electrolyte leakage detection result. In addition, the industrial personal computer may extract the region image including the defect regions from the target binary image, and input the region image into the third preset electrolyte leakage detection model, to obtain a second electrolyte leakage detection result. Further, the industrial personal computer may comprehensively determine, with reference to the foregoing two electrolyte leakage detection results, whether the electrolyte leakage region exists in the target binary image, and the information about the corresponding electrolyte leakage region when the electrolyte leakage region exists.

For another example, the industrial personal computer may input the target binary image into a fourth preset electrolyte leakage detection model, to obtain an electrolyte leakage detection result.

Certainly, the industrial personal computer may alternatively determine an electrolyte leakage detection result in another manner according to the target binary image.

In this embodiment of the present application, the industrial personal computer performs preset processing on the target fused image, to obtain the target binary image, and determine the electrolyte leakage detection result according to the target binary image. Because a boundary between the defect region and the non-defect region in the target binary image is obvious, it is conducive to more accurately and quickly determining the electrolyte leakage detection result.

In conclusion, in this embodiment of the present application, image fusion processing is performed according to the multi-channel image data, to obtain a target fused image; and electrolyte leakage detection processing is further performed according to the target fused image, to obtain an electrolyte leakage detection result. It can be learned that, in this embodiment of the present application, a manner in which electrolyte leakage detection processing is performed on the target fused image on which the multi-channel image data is fused is used. Because the target fused image is an image on which the multi-channel image data is fused, and the target fused image can provide more abundant and varied defect conditions, in the manner of performing electrolyte leakage detection processing based on the target fused image, it is conducive to further improving accuracy of electrolyte leakage detection.

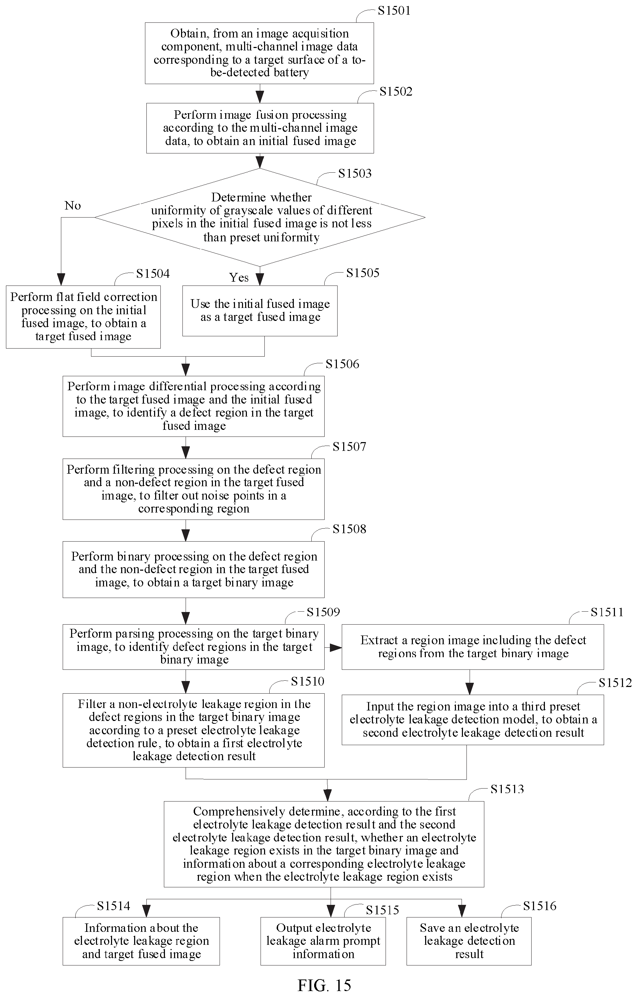

In some embodiments, FIG. 15 is a schematic flowchart of a battery electrolyte leakage detection method according to some other embodiments of the present application. Based on the foregoing embodiments, an overall procedure of performing electrolyte leakage detection on a battery is exemplarily described in this embodiment of the present application. As shown in FIG. 15, the method in the embodiments of the present application may include the following steps.

Step S1501: An industrial personal computer obtains, from an image acquisition component, multi-channel image data corresponding to a target surface of a to-be-detected battery.

Step S1502: The industrial personal computer performs image fusion processing on the multi-channel image data, to obtain an initial fused image.

Step S1503: The industrial personal computer determines whether uniformity of grayscale values of different pixels in the initial fused image is not less than preset uniformity.

If the uniformity of the grayscale values of the different pixels in the initial fused image is less than the preset uniformity, step S1504 is performed; and if the uniformity of the grayscale values of the different pixels in the initial fused image is not less than the preset uniformity, step S1505 is performed.

Step S1504: The industrial personal computer performs flat field correction processing on the initial fused image, to obtain a target fused image.

Step S1505: The industrial personal computer uses the initial fused image as the target fused image.

Step S1506: The industrial personal computer performs image differential processing according to the target fused image and the initial fused image, to identify a defect region in the target fused image.

Step S1507: The industrial personal computer performs filtering processing on the defect region and a non-defect region in the target fused image, to filter out noise points in a corresponding region.

Step S1508: The industrial personal computer performs binarization processing on the defect region and the non-defect region in the target fused image, to obtain a target binary image.

Step S1509: The industrial personal computer performs parsing processing on the target binary image, to identify defect regions in the target binary image.

Step S1510: The industrial personal computer filters a non-electrolyte leakage region in the defect regions in the target binary image according to a preset electrolyte leakage detection rule, to obtain a first electrolyte leakage detection result.

Step S1511: The industrial personal computer extracts a region image including the defect regions from the target binary image.

Step S1512: The industrial personal computer inputs the region image into a third preset electrolyte leakage detection model, to obtain a second electrolyte leakage detection result.

It should be understood that, when the second electrolyte leakage detection result indicates that an electrolyte leakage region exists, the industrial personal computer may store the second electrolyte leakage detection result.

Step S1513: The industrial personal computer comprehensively determines, according to the first electrolyte leakage detection result and the second electrolyte leakage detection result, whether an electrolyte leakage region exists in the target binary image and information about a corresponding electrolyte leakage region when the electrolyte leakage region exists.

Step S1514: The industrial personal computer displays the information about the electrolyte leakage region and the target fused image when determining that the electrolyte leakage region exists.

Step S1515: The industrial personal computer outputs electrolyte leakage alarm prompt information when determining that the electrolyte leakage region exists.

Step S1516: The industrial personal computer stores an electrolyte leakage detection result when determining that the electrolyte leakage region exists.

It should be noted that, for implementations of steps in this embodiment of the present application, refer to related content in the foregoing embodiment, and details are not described herein again.

It should be understood that, although the steps in the flowcharts involved in the embodiments are displayed sequentially according to instructions of arrows, these steps are not necessarily performed sequentially according to a sequence instructed by the arrows. Unless clearly specified in this specification, there is no strict sequence limitation on the execution of the steps, and the steps may be performed in another sequence. Moreover, at least some of the steps in the flowchart related to the embodiments may include a plurality of steps or a plurality of stages. The steps or stages are not necessarily performed at the same moment but may be performed at different moments. The steps or stages are not necessarily performed sequentially, but may be performed in turn or alternately with another step or at least some of steps or stages of the another step.

Based on the same inventive concept, an embodiment of the present application further provides a battery electrolyte leakage detection device configured to implement the foregoing battery electrolyte leakage detection method. An implementation solution provided by the device for resolving a problem is similar to the implementation solution recorded in the foregoing method. Therefore, for specific limitations on one or more of the battery electrolyte leakage detection device embodiments provided below, refer to the limitations on the foregoing battery electrolyte leakage detection method. Details are not described herein again.

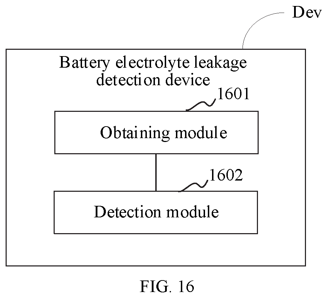

In some embodiments, FIG. 16 is a schematic diagram of a structure of a battery electrolyte leakage detection device according to some embodiments of the present application. The battery electrolyte leakage detection device Dev provided in this embodiment of the present application may be applied to the industrial personal computer in the battery electrolyte leakage detection system in the foregoing embodiments of the present application. As shown in FIG. 16, the battery electrolyte leakage detection device Dev in this embodiment of the present application may include an obtaining module 1601 and a detection module 1602.

The obtaining module 1601 is configured to obtain, from an image acquisition component in the battery electrolyte leakage detection system, multi-channel image data corresponding to a target surface of a to-be-detected battery; and

the detection module 1602 is configured to perform electrolyte leakage detection on the battery according to the multi-channel image data, to obtain an electrolyte leakage detection result.

In some embodiments, the detection module 1602 includes:
a fusion unit, configured to perform image fusion processing according to the multi-channel image data, to obtain a target fused image; and
a detection unit, configured to perform electrolyte leakage detection processing according to the target fused image, to obtain the electrolyte leakage detection result.

In some embodiments, the detection unit is specifically configured to:
perform preset processing on the target fused image, to obtain a target binary image, where a pixel value of a pixel in a non-defect region in the target binary image is a first preset value, and a pixel value of a pixel in a defect region in the target binary image is a second preset value, where the second preset value is greater than the first preset value; and
determine the electrolyte leakage detection result according to the target binary image.

In some embodiments, the detection unit is specifically configured to:
perform comprehensive detection on the target binary image according to a preset electrolyte leakage detection rule, to determine whether an electrolyte leakage region exists in the target binary image, where the preset electrolyte leakage detection rule is used for indicating a plurality of pieces of preset electrolyte leakage defect reference information.

In some embodiments, the detection unit is specifically configured to:
extract a region image including defect regions from the target binary image; and
input the region image into a preset electrolyte leakage detection model, to obtain whether an electrolyte leakage region exists in the region image.

In some embodiments, the fusion unit is specifically configured to:
perform image fusion processing on the multi-channel image data, to obtain an initial fused image; and
if uniformity of grayscale values of different pixels in the initial fused image is less than preset uniformity, perform flat field correction processing on the initial fused image, to obtain the target fused image.

In some embodiments, the detection unit is specifically configured to:
perform image differential processing according to the target fused image and the initial fused image, to identify a defect region in the target fused image; and
perform binarization processing on the defect region and a non-defect region in the target fused image, to obtain the target binary image.

In some embodiments, the battery electrolyte leakage detection device may further include:
a sending module, configured to send the electrolyte leakage detection result to a control device in the battery electrolyte leakage detection system, to indicate the control device to determine, according to comparison between the electrolyte leakage detection result and a preset defect condition, whether the to-be-detected battery meets a preset production requirement, where the preset defect condition is used for indicating a plurality of preset electrolyte leakage defect conditions that do not meet the preset production requirement.

The battery electrolyte leakage detection device provided in this embodiment of the present application may be configured to perform the foregoing technical solution in foregoing battery electrolyte leakage detection method embodiments in the present application. Their implementation principles and technical effects are similar. Details are not described herein again.

The modules in the foregoing battery electrolyte leakage detection device may be implemented entirely or partially by software, hardware, or a combination thereof. The foregoing modules may be built in or independent of a processor of an industrial personal computer in a hardware form, or may be stored in a memory of the industrial personal computer in a software form, so that the processor invokes and performs an operation corresponding to each of the foregoing modules.

In some embodiments, an embodiment of the present application further provides an industrial personal computer. The industrial personal computer may include a memory and a processor, where the memory stores a computer program, and the processor implements, when executing a computer program, the technical solution in foregoing battery electrolyte leakage detection method embodiments in the present application. Their implementation principles and technical effects are similar. Details are not described herein again.

In some embodiments, a computer-readable storage medium is further provided, having a computer program stored therein. The computer program, when executed by a processor, implements the technical solution in foregoing battery electrolyte leakage detection method embodiments in the present application. Their implementation principles and technical effects are similar. Details are not described herein again.

In some embodiments, a computer program product is further provided, including a computer program. The computer program, when executed by a processor, implements the technical solution in foregoing battery electrolyte leakage detection method embodiments in the present application. Their implementation principles and technical effects are similar. Details are not described herein again.

A person of ordinary skill in the art may understand that all or some of procedures of the method in the foregoing embodiments may be implemented by a computer program instructing relevant hardware. The program may be stored in a non-volatile computer-readable storage medium. When the program is executed, the procedures of the foregoing method embodiments may be implemented. Any reference to a memory, a database, or another medium used in the embodiments provided in the present application may include at least one of a non-volatile memory and a volatile memory. The non-volatile memory may include a read-only memory (Read-Only Memory, ROM), a magnetic tape, a floppy disk, a flash memory, an optical memory, a high-density embedded non-volatile memory, a resistive random access memory (ReRAM), a magnetoresistive random access memory (Magnetoresistive Random Access Memory, MRAM), a ferroelectric random access memory (Ferroelectric Random Access Memory, FRAM), a phase change memory (Phase Change Memory, PCM), a graphene memory, and the like. The volatile memory may include a random access memory (Random Access Memory, RAM) or an external cache memory. As a description and not a limit, the RAM may be in a plurality of forms, such as a static random access memory (Static Random Access Memory, SRAM) or a dynamic random access memory (Dynamic Random Access Memory, DRAM). The processors involved in the various embodiments provided in the present application may be a general-purpose processor, a central processing unit, a graphics processor, a digital signal processor, a programmable logic device, a quantum computing-based data processing logic device, and the like, and are not limited thereto.

Finally, it should be noted that the foregoing embodiments are only used to illustrate the technical solution of the present application, not to limit it. Although the present application has been described in detail with reference to the foregoing embodiments, it should be understood by a person of ordinary skill in the art that the technical solution described in the foregoing embodiments can still be modified or some or all of the technical features thereof can be equivalently replaced. However, these modifications or substitutions do not depart the essence of the corresponding technical solution from the scope of the technical solution of each embodiment of the present application, and should be covered in the scope of the claims and descriptions of the present application. Especially, as long as there is no structural conflict, the various technical features mentioned in each embodiment can be combined in any way. The present application is not limited to the particular embodiments disclosed herein, but includes all technical solutions that fall within the scope of the claims.

## Claims

1. A battery electrolyte leakage detection system, comprising an image acquisition component, a light source assembly, and an industrial personal computer separately connected to the image acquisition component and the light source assembly, wherein
the light source assembly faces a target surface of a to-be-detected battery, and is configured to project target detection light onto the target surface of the battery;
the image acquisition component is disposed around the light source assembly, and is configured to acquire image data of the target surface of the battery and output multi-channel image data corresponding to the target surface; and
the industrial personal computer is configured to obtain the multi-channel image data from the image acquisition component and perform electrolyte leakage detection on the battery according to the multi-channel image data, to obtain an electrolyte leakage detection result.

2. The battery electrolyte leakage detection system according to claim 1, wherein
the light source assembly comprises a preset light source component disposed opposite to the target surface of the battery; and
the preset light source component is configured to project the target detection light onto the target surface of the battery according to a preset light-emitting setting parameter.

3. The battery electrolyte leakage detection system according to claim 2, wherein
the light source assembly further comprises an optical mirror disposed between the target surface and the preset light source component;
the image acquisition component is disposed above the light source assembly;
the preset light source component is configured to project the target detection light onto the target surface through the optical mirror according to the preset light-emitting setting parameter, and the target detection light is sinusoidal fringe light; and
the image acquisition component is specifically configured to acquire the image data of the target surface of the battery through the optical mirror, and output the multi-channel image data corresponding to the target surface.

4. The battery electrolyte leakage detection system according to claim 2, wherein
the image acquisition component is disposed opposite to the target surface of the battery; and
the preset light source component is configured to project the target detection light onto the target surface according to the preset light-emitting setting parameter, and the target detection light comprises sectorized annular light.

5. The battery electrolyte leakage detection system according to any one of claims 1 to 4, wherein
the battery electrolyte leakage detection system comprises a first image detection mechanism and a second image detection mechanism that are symmetrically disposed, wherein the first image detection mechanism comprises a first image acquisition component and a first light source assembly, and the second image detection mechanism comprises a second image acquisition component and a second light source assembly;
the first light source assembly faces a first target surface of the to-be-detected battery, and is configured to project first target detection light onto the first target surface of the battery;
the second light source assembly faces a second target surface of the to-be-detected battery, and is configured to project second target detection light onto the second target surface of the battery, wherein the first target surface and the second target surface are two surfaces that are symmetrically disposed in the battery;
the first image acquisition component is configured to acquire image data of the first target surface of the battery, and output multi-channel image data corresponding to the first target surface;
the second image acquisition component is configured to acquire image data of the second target surface of the battery, and output multi-channel image data corresponding to the second target surface; and
the industrial personal computer is configured to perform electrolyte leakage detection on the battery according to the obtained multi-channel image data corresponding to the first target surface and the obtained multi-channel image data corresponding to the second target surface, to obtain an electrolyte leakage detection result.

6. The battery electrolyte leakage detection system according to any one of claims 1 to 5, wherein
the battery electrolyte leakage detection system comprises a third image detection mechanism and a fourth image detection mechanism that are disposed side by side, wherein the third image detection mechanism comprises a third image acquisition component and a third light source assembly, and the fourth image detection mechanism comprises a fourth image acquisition component and a fourth light source assembly; and
the third light source assembly faces a first region on the target surface of the to-be-detected battery, and is configured to project third target detection light to the first region on the target surface of the battery;
the fourth light source assembly faces a second region on the target surface of the to-be-detected battery, and is configured to project fourth target detection light to the second region on the target surface of the battery, wherein the first region and the second region are different regions obtained by dividing the target surface along a length direction;
the third image acquisition component is configured to acquire image data of the first region on the target surface, and output multi-channel image data corresponding to the first region on the target surface;
the fourth image acquisition component is configured to acquire image data of the second region on the target surface, and output multi-channel image data corresponding to the second region on the target surface; and
the industrial personal computer is configured to perform electrolyte leakage detection on the battery according to the obtained multi-channel image data corresponding to the first region on the target surface and the obtained multi-channel image data corresponding to the second region on the target surface, to obtain an electrolyte leakage detection result.

7. The battery electrolyte leakage detection system according to any one of claims 1 to 6, further comprising a transfer track, an accommodating component, and a driving component, wherein
the image acquisition component and the light source assembly are disposed around the transfer track;
the accommodating component is disposed on the transfer track, and is configured to carry the to-be-detected battery, wherein the target surface of the battery faces a direction perpendicular to an extension direction of the transfer track;
the driving component is connected to the transfer track or the accommodating component, to drive the accommodating component to move along the transfer track; and
the transfer track is configured to move the to-be-detected battery from an electrolyte leakage detection position to a film wrapping position.

8. The battery electrolyte leakage detection system according to claim 7, further comprising a control device separately connected to the driving component and the image acquisition component, wherein
the control device is configured to control the driving component to drive the accommodating component to move to the corresponding electrolyte leakage detection position along the transfer track, and control the image acquisition component to detect the multi-channel image data corresponding to the target surface of the battery.

9. The battery electrolyte leakage detection system according to claim 8, wherein the control device is further connected to the industrial personal computer, wherein
the control device is further configured to receive the electrolyte leakage detection result sent by the industrial personal computer, and determine, according to comparison between the electrolyte leakage detection result and a preset defect condition, whether the to-be-detected battery meets a preset production requirement, wherein the preset defect condition is used for indicating a plurality of preset electrolyte leakage defect conditions that do not meet the preset production requirement.

10. The battery electrolyte leakage detection system according to claim 9, further comprising a sliding rail, a cantilever, and a grabbing component, wherein
the sliding rail is disposed above the transfer track through a support frame, a front end of the cantilever is movably disposed on the sliding rail, and the grabbing component is disposed at a rear end of the cantilever;
an extension direction of the sliding rail is perpendicular to the extension direction of the transfer track; and
the control device is specifically configured to: when determining that the to-be-detected battery does not meet the preset production requirement, control the cantilever to move above the battery along the sliding rail, and control the grabbing component to grab the battery along an extension direction of the cantilever, to move the battery to a preset waste region disposed near the transfer track.

11. The battery electrolyte leakage detection system according to any one of claims 1 to 10, wherein the industrial personal computer is specifically configured to:
perform image fusion processing according to the multi-channel image data, to obtain a target fused image; and
perform electrolyte leakage detection processing according to the target fused image, to obtain the electrolyte leakage detection result.

12. The battery electrolyte leakage detection system according to claim 11, wherein the industrial personal computer is specifically configured to:
perform preset processing on the target fused image, to obtain a target binary image, wherein a pixel value of a pixel in a non-defect region in the target binary image is a first preset value, a pixel value of a pixel in a defect region in the target binary image is a second preset value, and the second preset value is greater than the first preset value; and
determine the electrolyte leakage detection result according to the target binary image.

13. A battery electrolyte leakage detection method, wherein the method is applied to the industrial personal computer in the battery electrolyte leakage detection system according to any one of claims 1 to 12, and the method comprises:
obtaining, from an image acquisition component in the battery electrolyte leakage detection system, multi-channel image data corresponding to a target surface of a to-be-detected battery; and
performing electrolyte leakage detection on the battery according to the multi-channel image data, to obtain an electrolyte leakage detection result.

14. The method according to claim 13, wherein said performing electrolyte leakage detection on the battery according to the multi-channel image data, to obtain an electrolyte leakage detection result comprises:
performing image fusion processing according to the multi-channel image data, to obtain a target fused image; and
performing electrolyte leakage detection processing according to the target fused image, to obtain the electrolyte leakage detection result.

15. The method according to claim 14, wherein said performing electrolyte leakage detection processing according to the target fused image, to obtain the electrolyte leakage detection result comprises:
performing preset processing on the target fused image, to obtain a target binary image, wherein a pixel value of a pixel in a non-defect region in the target binary image is a first preset value, a pixel value of a pixel in a defect region in the target binary image is a second preset value, and the second preset value is greater than the first preset value; and
determining the electrolyte leakage detection result according to the target binary image.

16. The method according to claim 15, wherein said determining the electrolyte leakage detection result according to the target binary image comprises:
performing comprehensive detection on the target binary image according to a preset electrolyte leakage detection rule, to determine whether an electrolyte leakage region exists in the target binary image, wherein the preset electrolyte leakage detection rule is used for indicating a plurality of pieces of preset electrolyte leakage defect reference information.

17. The method according to claim 15, wherein said determining the electrolyte leakage detection result according to the target binary image comprises:
extracting a region image comprising defect regions from the target binary image; and
inputting the region image into a preset electrolyte leakage detection model, to obtain whether an electrolyte leakage region exists in the region image.

18. The method according to any one of claims 15 to 17, wherein said performing image fusion processing according to the multi-channel image data, to obtain a target fused image comprises:
performing image fusion processing on the multi-channel image data, to obtain an initial fused image; and
if uniformity of grayscale values of different pixels in the initial fused image is less than preset uniformity, performing flat field correction processing on the initial fused image, to obtain the target fused image.

19. The method according to claim 18, wherein said performing preset processing on the target fused image, to obtain a target binary image comprises:
performing image differential processing according to the target fused image and the initial fused image, to identify a defect region in the target fused image; and
performing binarization processing on the defect region and a non-defect region in the target fused image, to obtain the target binary image.

20. The method according to any one of claims 13 to 19, further comprising:
sending the electrolyte leakage detection result to a control device in the battery electrolyte leakage detection system, to indicate the control device to determine, according to comparison between the electrolyte leakage detection result and a preset defect condition, whether the to-be-detected battery meets a preset production requirement, wherein the preset defect condition is used for indicating a plurality of preset electrolyte leakage defect conditions that do not meet the preset production requirement.
